# EUROPEAN PATENT APPLICATION

(11) **EP 4 538 814 A1**
(43) Date of publication of application: **16.04.2025**
(21) Application number: 23870540.4
(22) Date of filing: 20.09.2023
(51) Int. Cl.: G05B 19/418, G05B 15/02, H04L 12/28

(54) **SMART DEVICE CONTROL METHOD, ELECTRONIC DEVICE, AND SYSTEM**

(30) Priority: 30.09.2022 CN 202211214601
(71) Applicant: Huawei Technologies Co., Ltd., Shenzhen, Guangdong 518129 (CN)
(72) Inventor: ZENG, Li, Shenzhen, Guangdong 518129 (CN)
(74) Representative: Maiwald GmbH
(86) International application number: PCT/CN2023/120154
(87) International publication number: WO 2024/067308

(57) **Abstract**

This application provides an intelligent device control method, an electronic device, and a system, and relates to the field of terminal technologies. In this application, device control efficiency can be improved. The method may be applied to a first electronic device or a component (for example, a chip system) that supports the first electronic device in implementing a related function. The method includes: displaying a first interface, where the first interface includes information about a first scenario; and after detecting that a second electronic device is close to the first electronic device or the second electronic device is in contact with the first electronic device, sending configuration information of the first scenario and device information of the second electronic device to a third electronic device, so that the third electronic device associates the second electronic device with the first scenario.

## Description

This application claims priority to Chinese Patent Application No. 202211214601.3, filed with the China National Intellectual Property Administration on September 30, 2022 and entitled "INTELLIGENT DEVICE CONTROL METHOD, ELECTRONIC DEVICE, AND SYSTEM", which is incorporated herein by reference in its entirety.

### TECHNICAL FIELD

Embodiments of this application relate to the field of terminal technologies, and in particular, to an intelligent device control method, an electronic device, and a system.

### BACKGROUND

Currently, a user has more devices. For example, in a home scenario, various devices at home may be connected together by using an internet of things technology, to form a smart home system, to implement centralized control of the devices, and provide the user with a plurality of functions such as home appliance control, lighting control, and intruder alarm.

In some solutions, the user may create a linkage scenario through a scenario interface provided by a smart home application, find a corresponding device through a home interface provided by the smart home application, and set an associated linkage scenario for the device. Consequently, user operations are complex and time-consuming.

### SUMMARY

To resolve the foregoing technical problem, embodiments of this application provide an intelligent device control method, an electronic device, and a system. According to the technical solutions provided in embodiments of this application, device control efficiency can be improved.

To achieve the foregoing technical objective, embodiments of this application provide the following technical solutions.

According to a first aspect, an intelligent device control method is provided. The method is applied to a first electronic device or a component (for example, a chip system) that supports a first electronic device in implementing a related function. The method includes:
displaying a first interface, where the first interface includes information about a first scenario; and
after detecting that a second electronic device is close to the first electronic device or the second electronic device is in contact with the first electronic device, sending configuration information of the first scenario and device information of the second electronic device to a third electronic device, so that the third electronic device associates the second electronic device with the first scenario.

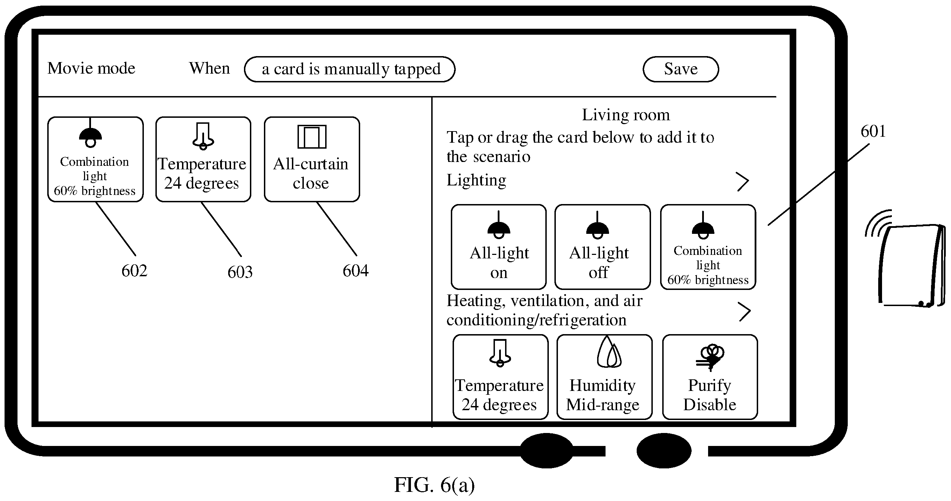

For example, as shown in FIG. 6(a), a smart panel (an example of the first electronic device) displays an interface 601 (an example of the first interface), and the interface 601 includes information about a Movie mode scenario (an example of the first scenario). After detecting that a switch (an example of the second electronic device) is close to a mobile phone or a switch is in contact with a mobile phone, the mobile phone sends configuration information of the Movie mode scenario and device information of the switch to a hub device (an example of the third electronic device), so that the hub device associates the switch with the Movie mode scenario.

In this way, when the second electronic device is close to or is in contact with the first electronic device, the first electronic device may be triggered to send the configuration information of the first scenario and information about the second electronic device to the third electronic device, so that the third electronic device performs scenario association by the third electronic device. In this process, a user does not need to switch a plurality of interfaces to complete a scenario association procedure.

In addition, the first electronic device sends the configuration information of the first scenario to the third electronic device, so that the third electronic device can centrally manage and control devices in a whole house. In this way, subsequently, the user may control the second electronic device to trigger the third device to control execution of the first scenario without using the first electronic device. In other words, in a scenario in which there is no first electronic device (for example, a mobile phone) or power of the first electronic device is insufficient, the user may still control execution of the first scenario by controlling the second electronic device (for example, a smart switch).

In a possible design, the method further includes:
displaying a second interface after detecting that the second electronic device is close to or is in contact with the first electronic device, where the second interface is used to set an event that is capable of being detected by the second electronic device and that needs to be associated with the first scenario; and
receiving a first event selected by a user on the second interface; and
the sending configuration information of the first scenario and device information of the second electronic device to a third electronic device includes: sending information about the first event associated with the second electronic device and the configuration information of the first scenario to the third electronic device, so that the third electronic device associates, with the first scenario, the first event associated with the second electronic device.

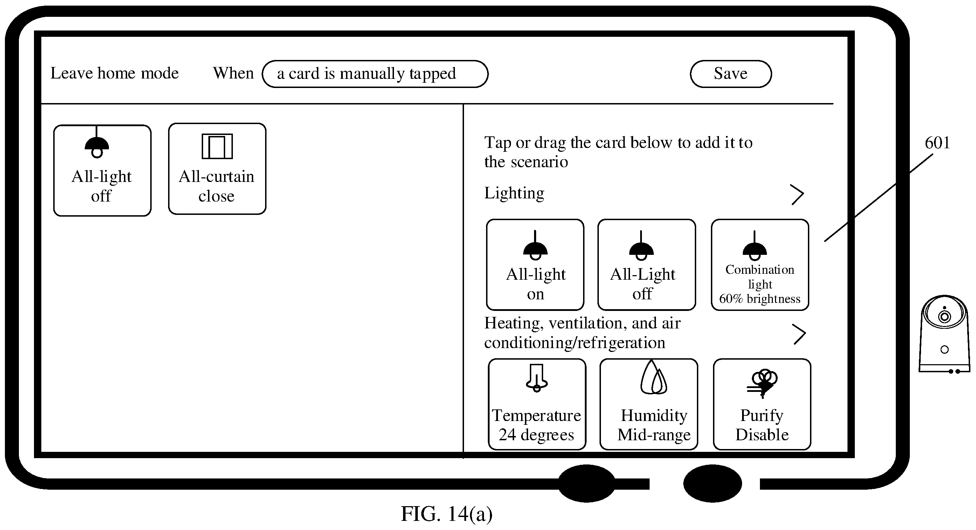

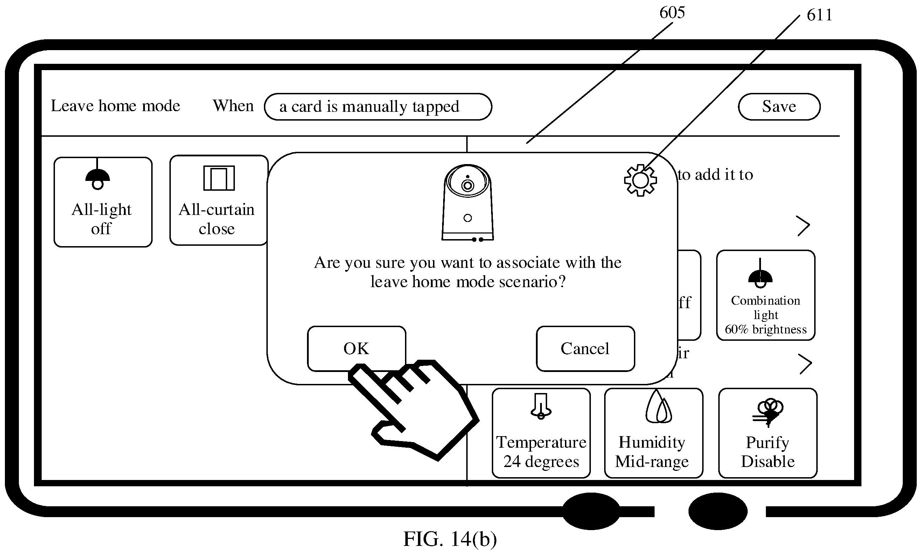

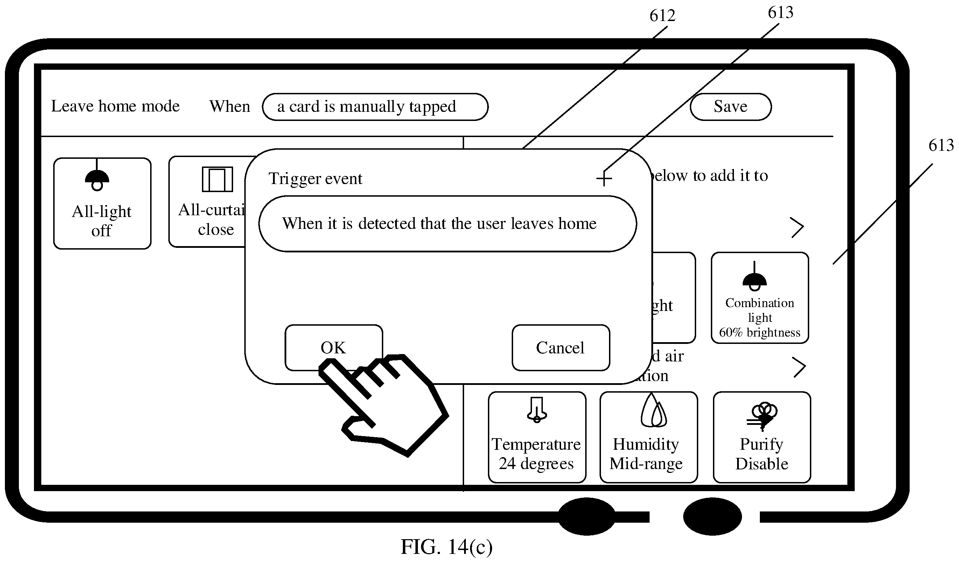

For example, as shown in FIG. 14(a), after detecting that a camera (the second electronic device) is close to or is in contact with the smart panel, the smart panel may display a window 605 shown in FIG. 14(b). After detecting that the user taps an OK button in the window 605, the smart panel may display a window 612 shown in FIG. 14(c) (the window 612 is presented on a second interface 615). After receiving an event "The user leaves home" (the first event) selected by the user in the window 612 on the interface 615, the smart panel sends, to the hub device, information about the event of "The user leaves home" associated with the camera and configuration information of the leave mode scenario, so that the hub device associates the event of "The user leaves home" with the leave home mode scenario. Subsequently, when detecting the event that the user leaves home, the camera may send a control instruction to the hub device, and the hub device controls execution of the leave home mode scenario associated with the leave home event, for example, controls all lights to be turned off and all curtains to be closed. In this way, after detecting that the first event occurs, the second electronic device may autonomously send a control instruction to the hub device, and the hub device executes a scenario associated with the first event without user manipulation. This simplifies operation control complexity of executing the scenario.

In a possible design, the second electronic device is provided with a plurality of control components. The method further includes:
displaying a third interface after detecting that the second electronic device is close to or is in contact with the first electronic device, where the third interface is used to set a control component that needs to be associated with the first scenario; and
receiving a first control component selected by a user on the third interface; and
the sending configuration information of the first scenario and device information of the second electronic device to a third electronic device includes: sending the configuration information of the first scenario and information about the first control component of the second electronic device to the third electronic device, so that the third electronic device associates the first control component of the second electronic device with the first scenario.

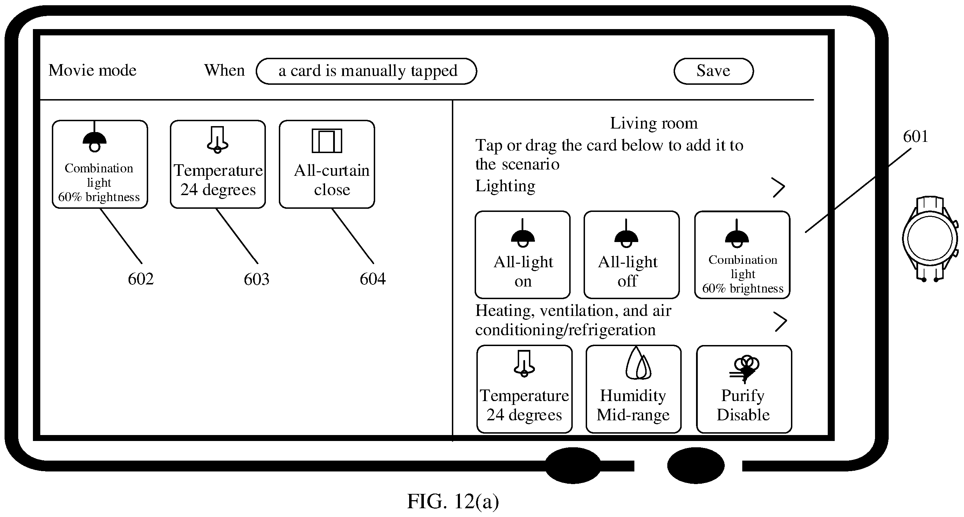

For example, as shown in FIG. 12(a), after detecting that a watch (the second electronic device) is close to or is in contact with the smart panel, the smart panel displays an interface 601 (the third interface). The interface 601 may include a window 605.

An up key of the watch (the first control component) selected by the user in the window 605 on the interface 601 is received, and the smart panel sends the configuration information of the Movie mode scenario and information about the up key of the watch to the hub device, so that the hub device associates the up key of the watch with the Movie mode scenario. In this way, different control components of the second electronic device may be associated with different scenarios, to enrich a control function of the second electronic device. The user may control, by using the different control components of the second electronic device, execution of the different scenarios, to meet a scenario execution requirement.

In a possible design, the first interface includes a first control, and the method further includes:
detecting an operation performed by the user on the first control, and displaying first prompt information, where the first prompt information is used to prompt the user to enable the second electronic device to be close to or in contact with the first electronic device.

In a possible design, the method further includes:
displaying second prompt information after detecting that the second electronic device is close to the first electronic device or is in contact with the first electronic device, where the second prompt information is used to prompt the user to associate the second electronic device with the first scenario; and
the sending configuration information of the first scenario and device information of the second electronic device to a third electronic device includes: detecting an operation associated with a user indication, and sending the configuration information of the first scenario and the device information of the second electronic device to the third electronic device.

According to a second aspect, an intelligent device control method is provided, applied to a second electronic device or a chip system. The method includes:
detecting whether a trigger condition of a first scenario is met, and sending a control instruction to a third electronic device when the trigger condition is met, for the third electronic device to control one or more fourth electronic devices to execute the first scenario.

In a possible design, the trigger condition includes that an operation performed by a user on the second electronic device is detected.

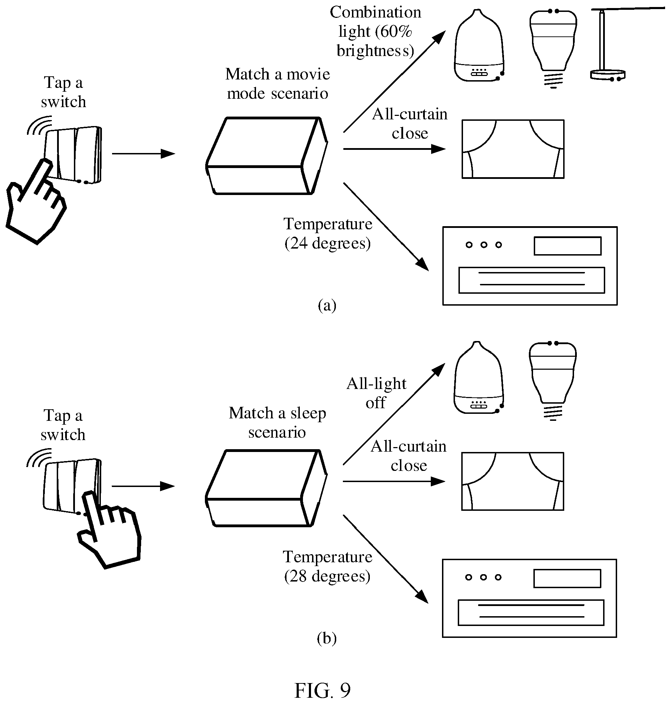

For example, as shown in (a) in FIG. 9, after a tap operation performed by the user on a switch (an example of the second electronic device) is detected, the switch sends a control instruction to a hub device (an example of the third electronic device). The hub device controls a fourth electronic device to execute a Movie mode scenario (an example of the first scenario).

In a possible design, the trigger condition includes that an operation performed by a user on a first control component of the second electronic device is detected; and the control instruction carries information about the operation performed by the user on the first control component.

For example, as shown in (a) in FIG. 9, after a tap operation performed by the user on a left key (an example of the first control component) of the switch is detected, the switch sends a control instruction (carrying information about an operation performed by the user on the left key) to the hub device (an example of the third electronic device). The hub device controls the fourth electronic device to execute the Movie mode scenario (an example of the first scenario) associated with the left key. As shown in (b) in FIG. 9, after a tap operation performed by the user on a right key of the switch is detected, the switch sends a control instruction (carrying information about an operation performed by the user on the right key) to the hub device, and the hub device controls the fourth electronic device to execute a sleep scenario associated with the right key of the switch. In this way, the user may control, by using different control components of a same second electronic device, execution of different scenarios. This reduces operation control complexity of the user, and helps improve operation control efficiency.

In a possible design, the trigger condition includes that occurrence of a first event is detected; and the control instruction carries information about the first event.

In a possible design, the second electronic device is provided with a display, and the display is configured to display information about a scenario associated with the second electronic device.

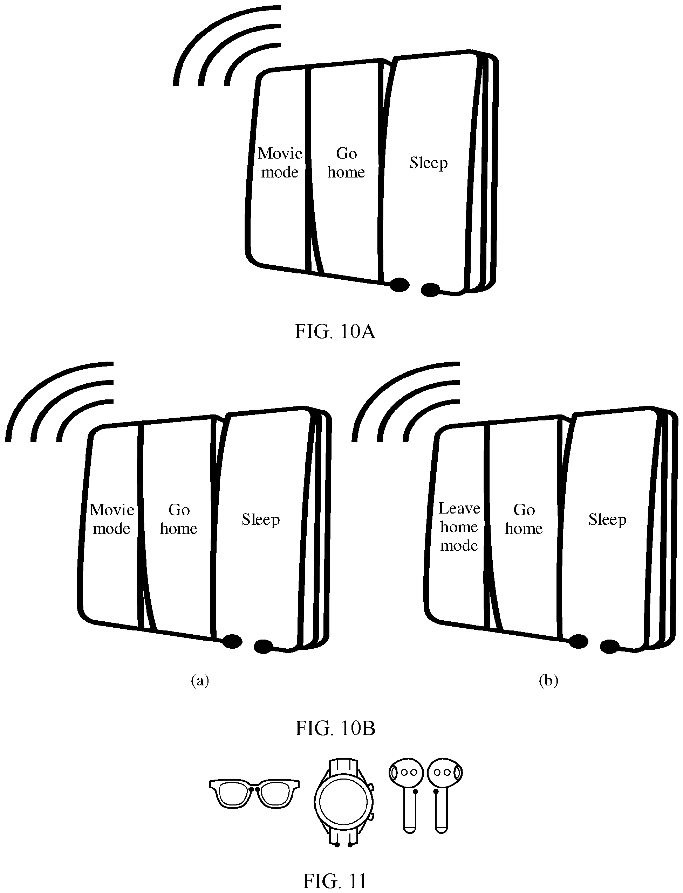

For example, as shown in FIG. 10A, the switch is provided with a display configured to display information about one or more scenarios associated with the switch. In this way, the user can clearly know the information about the scenario associated with the second electronic device, to control the second electronic device based on the information to execute a corresponding scenario.

In a possible design, the information about the scenario associated with the second electronic device includes information about a scenario associated with each control component. For example, as shown in FIG. 10A, the left key of the switch is associated with the Movie mode scenario, a middle key is associated with a go home scenario, and the right key is associated with the sleep scenario.

In a possible design, the second electronic device includes a control device provided with a button/key and a device capable of detecting the trigger condition (for example, the first event), the control device provided with the button/key includes a smart switch, and the second electronic device supports an NFC function or a Bluetooth function.

According to a third aspect, an intelligent device control method is provided, applied to a third electronic device or a chip system. The method includes:
when a second electronic device is close to a first electronic device or the second electronic device is in contact with the first electronic device, receiving configuration information of a first scenario and device information of the second electronic device from the first electronic device;
associating the second electronic device with the first scenario;
receiving a control instruction from the second electronic device when a trigger condition of the first scenario is met; and
controlling, based on the control instruction, one or more fourth electronic devices to execute the first scenario.

In a possible design, the trigger condition includes any one of the following conditions: a user performs an operation on the second electronic device, the user performs an operation on a first control component of the second electronic device, and a first event occurs.

In a possible design, when the trigger condition is that the user performs an operation on the first control component of the second electronic device, the control instruction carries information about the operation performed by the user on the first control component.

The controlling, based on the control instruction, one or more fourth electronic devices to execute the first scenario includes: controlling, based on the information about the first control component carried in the control instruction, the one or more fourth electronic devices to execute the first scenario associated with the first control component.

In a possible design, when the trigger condition is that the first event occurs, the control instruction carries information about the first event.

The controlling one or more fourth electronic devices to execute the first scenario includes: controlling, based on information about the first event carried in the control instruction, the one or more fourth electronic devices to execute the first scenario associated with the first event.

According to a fourth aspect, an intelligent device control apparatus is provided, applied to a first electronic device or a chip system. The apparatus includes:
a display module, configured to display a first interface, where the first interface includes information about a first scenario; and
a communication module, configured to: after detecting that a second electronic device is close to the first electronic device or the second electronic device is in contact with the first electronic device, send configuration information of the first scenario and device information of the second electronic device to a third electronic device, so that the third electronic device associates the second electronic device with the first scenario.

In a possible design, the apparatus further includes an input module;
the display module is further configured to: display a second interface after detecting that the second electronic device is close to or is in contact with the first electronic device, where the second interface is used to set an event that is capable of being detected by the second electronic device and that needs to be associated with the first scenario;
the input module is configured to receive a first event selected by a user on the second interface; and
the sending configuration information of the first scenario and device information of the second electronic device to a third electronic device includes: sending information about the first event associated with the second electronic device and the configuration information of the first scenario to the third electronic device, so that the third electronic device associates, with the first scenario, the first event associated with the second electronic device.

In a possible design, the second electronic device is provided with a plurality of control components.

The display module is further configured to: display a third interface after detecting that the second electronic device is close to or is in contact with the first electronic device, where the third interface is used to set a control component that needs to be associated with the first scenario.

The input module is further configured to receive a first control component selected by a user on the third interface.

The sending configuration information of the first scenario and device information of the second electronic device to a third electronic device includes: sending the configuration information of the first scenario and information about the first control component of the second electronic device to the third electronic device, so that the third electronic device associates the first control component of the second electronic device with the first scenario.

In a possible design, the first interface includes a first control. The display module is further configured to: after detecting an operation performed by the user on the first control, display first prompt information, where the first prompt information is used to prompt the user to enable the second electronic device to be close to or in contact with the first electronic device.

In a possible design, the display module is further configured to: display second prompt information after detecting that the second electronic device is close to the first electronic device or is in contact with the first electronic device, where the second prompt information is used to prompt the user to associate the second electronic device with the first scenario.

The sending configuration information of the first scenario and device information of the second electronic device to a third electronic device includes: detecting an operation associated with a user indication, and sending the configuration information of the first scenario and the device information of the second electronic device to the third electronic device.

According to a fifth aspect, an intelligent device control apparatus is provided, applied to a second electronic device or a chip system. The apparatus includes:
a processing module, configured to detect whether a trigger condition of a first scenario is met; and
a communication module, configured to send a control instruction to a third electronic device when the trigger condition is met, for the third electronic device to control one or more fourth electronic devices to execute the first scenario.

In a possible design, the trigger condition includes that an operation performed by a user on the second electronic device is detected.

In a possible design, the trigger condition includes that an operation performed by a user on a first control component of the second electronic device is detected; and the control instruction carries information about the operation performed by the user on the first control component.

In a possible design, the trigger condition includes that occurrence of a first event is detected; and the control instruction carries information about the first event.

In a possible design, the second electronic device is provided with a display, and the display is configured to display information about a scenario associated with the second electronic device.

In a possible design, the information about the scenario associated with the second electronic device includes information about a scenario associated with each control component.

In a possible design, the second electronic device includes a control device provided with a button/key and a device capable of detecting the trigger condition, the control device provided with the button/key includes a smart switch, and the second electronic device supports an NFC function or a Bluetooth function.

According to a sixth aspect, an intelligent device control apparatus is provided, applied to a third electronic device or a chip system. The apparatus includes:
a communication module, configured to: when a second electronic device is close to a first electronic device or the second electronic device is in contact with the first electronic device, receive configuration information of a first scenario and device information of the second electronic device from the first electronic device; and
a processing module, configured to associate the second electronic device with the first scenario, where
the communication module is further configured to receive a control instruction from the second electronic device when a trigger condition of the first scenario is met; and
the processing module is further configured to control, based on the control instruction, one or more fourth electronic devices to execute the first scenario.

In a possible design, the trigger condition includes any one of the following conditions: a user performs an operation on the second electronic device, the user performs an operation on a first control component of the second electronic device, and a first event occurs.

In a possible design, when the trigger condition is that the user performs an operation on the first control component of the second electronic device, the control instruction carries information about the operation performed by the user on the first control component.

The controlling, based on the control instruction, one or more fourth electronic devices to execute the first scenario includes: controlling, based on the information about the first control component carried in the control instruction, the one or more fourth electronic devices to execute the first scenario associated with the first control component.

In a possible design, when the trigger condition is that the first event occurs, the control instruction carries information about the first event.

The controlling one or more fourth electronic devices to execute the first scenario includes: controlling, based on the information about the first event carried in the control instruction, the one or more fourth electronic devices to execute the first scenario associated with the first event.

According to a seventh aspect, an embodiment of this application provides an electronic device. The electronic device has a function of implementing the intelligent device control method according to any one of the foregoing aspects and the possible implementations of the foregoing aspects. The function may be implemented by hardware, or may be implemented by hardware executing corresponding software. The hardware or the software includes one or more modules corresponding to the foregoing function.

According to an eighth aspect, an intelligent device control system is provided, including:
a first electronic device, configured to display a first interface, where the first interface includes information about a first scenario, where
the first electronic device is further configured to: after detecting that a second electronic device is close to the first electronic device or the second electronic device is in contact with the first electronic device, send configuration information of the first scenario and device information of the second electronic device to a third electronic device; and
the third electronic device, configured to: receive the configuration information and the device information of the second electronic device, and associate the second electronic device with the first scenario.

In a possible design, the second electronic device is further configured to: detect whether a trigger condition of the first scenario is met, and send a control instruction to the third electronic device when the trigger condition is met; and
the third electronic device is further configured to: receive the control instruction, and control, based on the control instruction, one or more fourth electronic devices to execute the first scenario.

In a possible design, the first electronic device is further configured to:
display a second interface after detecting that the second electronic device is close to or is in contact with the first electronic device, where the second interface is used to set an event that is capable of being detected by the second electronic device and that needs to be associated with the first scenario; and
receive a first event selected by a user on the second interface.

That the first electronic device is configured to send the configuration information of the first scenario and the device information of the second electronic device to the third electronic device includes: sending information about the first event associated with the second electronic device and the configuration information of the first scenario to the third electronic device.

That the third electronic device is configured to associate the second electronic device with the first scenario includes: associating, with the first scenario, the first event associated with the second electronic device.

In a possible design, the second electronic device is provided with a plurality of control components.

The first electronic device is further configured to:
display a third interface after detecting that the second electronic device is close to or is in contact with the first electronic device, where the third interface is used to set a control component that needs to be associated with the first scenario; and
receive a first control component selected by a user on the third interface.

That the first electronic device is configured to send configuration information of the first scenario and device information of the second electronic device to a third electronic device includes: sending the configuration information of the first scenario and information about the first control component of the second electronic device to the third electronic device.

That the third electronic device is configured to associate the second electronic device with the first scenario includes: associating the first control component of the second electronic device with the first scenario.

In a possible design, the trigger condition includes that an operation performed by a user on the second electronic device is detected.

In a possible design, the trigger condition includes that an operation performed by the user on the first control component of the second electronic device is detected; and the control instruction carries information about the operation performed by the user on the first control component.

That the third electronic device is configured to control, based on the control instruction, one or more fourth electronic devices to execute the first scenario includes: controlling, based on the information about the first control component carried in the control instruction, the one or more fourth electronic devices to execute the first scenario associated with the first control component.

In a possible design, the trigger condition includes that occurrence of the first event is detected; and the control instruction carries the information about the first event.

That the third electronic device is configured to control, based on the control instruction, one or more fourth electronic devices to execute the first scenario includes: controlling, based on the information about the first event carried in the control instruction, the one or more fourth electronic devices to execute the first scenario associated with the first event.

In a possible design, the second electronic device is provided with a display, and the display is configured to display information about a scenario associated with the second electronic device.

In a possible design, the information about the scenario associated with the second electronic device includes information about a scenario associated with each control component.

In a possible design, the first interface includes a first control; and
an operation performed by the user on the first control is detected, and first prompt information is displayed, where the first prompt information is used to prompt the user to enable the second electronic device to be close to or in contact with the first electronic device.

In a possible design, the first electronic device is further configured to: display second prompt information after detecting that the second electronic device is close to the first electronic device or is in contact with the first electronic device, where the second prompt information is used to prompt the user to associate the second electronic device with the first scenario.

The sending configuration information of the first scenario and device information of the second electronic device to a third electronic device includes: detecting an operation associated with a user indication, and sending the configuration information of the first scenario and the device information of the second electronic device to the third electronic device.

In a possible design, the second electronic device includes a control device provided with a button/key and a device capable of detecting the trigger condition, the control device provided with the button/key includes a smart switch, and the second electronic device supports a near field communication NFC function or a Bluetooth function.

According to a ninth aspect, an embodiment of this application provides a computer program product. When the computer program product runs on an electronic device, the electronic device is enabled to perform the method according to any one of the first aspect or the implementations of the first aspect.

According to a tenth aspect, an embodiment of this application provides a circuit system. The circuit system includes a processing circuit, and the processing circuit is configured to perform the method according to any one of the first aspect or the implementations of the first aspect.

According to an eleventh aspect, an embodiment of this application provides a chip system, including at least one processor and at least one interface circuit. The at least one interface circuit is configured to perform a receiving and sending function, and send instructions to the at least one processor, and when the at least one processor executes the instructions, the at least one processor performs the method according to any one of the first aspect or the implementations of the first aspect.

According to a twelfth aspect, a computer-readable storage medium is provided. The computer-readable storage medium stores a computer program (which may also be referred to as instructions or code). When the computer program is executed by an electronic device, the electronic device is enabled to perform the method according to any one of the first aspect or the implementations of the first aspect.

### BRIEF DESCRIPTION OF DRAWINGS

FIG. 1(a) and FIG. 1(b) are diagrams of a scenario association method in a related technology;
FIG. 2 is a diagram of a system architecture according to an embodiment of this application;
FIG. 3 is a diagram of a system architecture according to an embodiment of this application;
FIG. 4 is a diagram of a hardware structure of an electronic device according to an embodiment of this application;
FIG. 5 is a diagram of a software structure of an electronic device according to an embodiment of this application;
FIG. 6(a) to FIG. 6(c) are diagrams of interfaces according to an embodiment of this application;
FIG. 7 is a diagram of a scenario according to an embodiment of this application;
FIG. 8(a) and FIG. 8(b) are diagrams of interfaces according to an embodiment of this application;
FIG. 9 is a diagram of a scenario according to an embodiment of this application;
FIG. 10A and FIG. 10B are diagrams of scenarios according to an embodiment of this application;
FIG. 11 is a diagram of a scenario according to an embodiment of this application;
FIG. 12(a) and FIG. 12(b) are diagrams of interfaces according to an embodiment of this application;
FIG. 13A(a) and FIG. 13A(b) are diagrams of interfaces according to an embodiment of this application;
FIG. 13B(a) and FIG. 13B(b) are diagrams of interfaces according to an embodiment of this application;
FIG. 14(a) to FIG. 14(c) are diagrams of interfaces according to an embodiment of this application;
FIG. 15 is a diagram of a structure of an apparatus according to an embodiment of this application; and
FIG. 16 is a diagram of a structure of a chip system according to an embodiment of this application.

### DESCRIPTION OF EMBODIMENTS

The following describes the technical solutions in embodiments of this application with reference to the accompanying drawings in embodiments of this application. In the descriptions of embodiments of this application, terms used in the following embodiments are merely intended for a purpose of describing specific embodiments, but are not intended to limit this application. The terms "one", "a" and "this" of singular forms used in this specification and the appended claims of this application are also intended to include expressions such as "one or more", unless otherwise specified in the context clearly. It should be further understood that, in the following embodiments of this application, "at least one" and "one or more" mean one or more (including two).

Reference to "an embodiment", "some embodiments", or the like described in this specification indicates that one or more embodiments of this application include a specific feature, structure, or characteristic described with reference to the embodiment. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner. The term "connection" includes direct connection and indirect connection, unless otherwise specified. "First" and "second" are merely intended for a purpose of description, and shall not be understood as an indication or implication of relative importance or implicit indication of a quantity of indicated technical features.

In embodiments of this application, the term "example", "for example", or the like is used to give an example, an illustration, or a description. Any embodiment or design scheme described as an "example" or "for example" in embodiments of this application should not be construed as being more preferred or more advantageous than another embodiment or design scheme. Exactly, use of the term "example", "for example", or the like is intended to present a related concept in a specific manner.

In some scenarios, various electronic devices enter people's life. A concept of a smart home system is proposed for a home use scenario of an electronic device. A home is used as a platform, and technologies such as the internet of things and automatic control are used, so that the smart home system organically combines various electronic devices and applications related to home life. An electronic device in the smart home system is, for example, a smart home device. Smart home devices are intelligent devices, including audio and video devices (such as a large-screen device and a Bluetooth sound box), lighting devices (such as a dome lamp, a table light, and a spotlight), environment control devices (such as an air conditioner and an air purifier), and intruder alarm devices (such as a human body sensor and a camera)

For example, it is assumed that the air conditioner is used as the smart home device and is connected to a mobile phone. The air conditioner may receive a control command sent by a user by using the mobile phone. For example, the air conditioner may be automatically started after receiving an "On" command input by the user by using the mobile phone.

To control the smart home device, the electronic device needs to establish a connection to the smart home device in advance, and configure the smart home device.

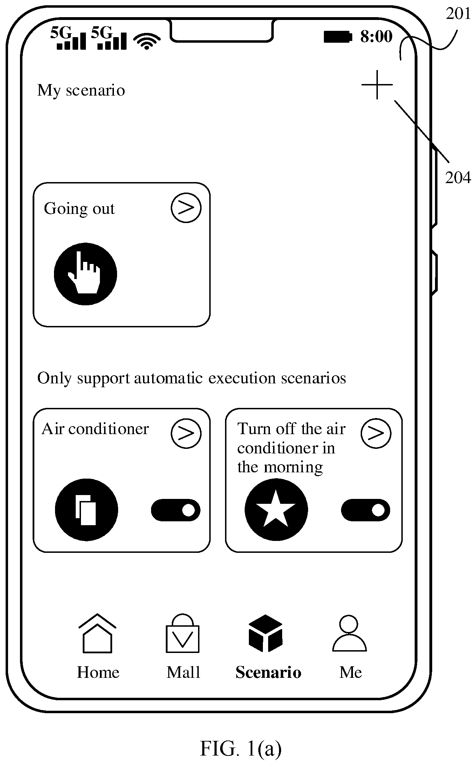

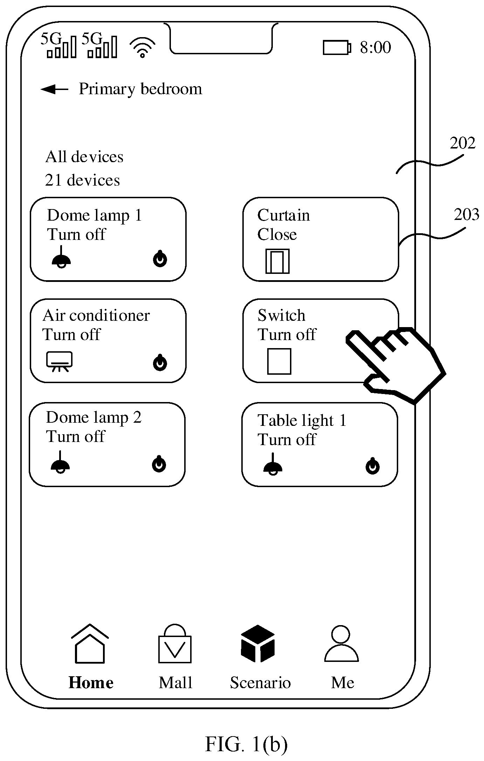

For example, it is assumed that an AI Life application is installed on the mobile phone. The mobile phone starts the AI Life application, and displays a scenario interface 201 shown in FIG. 1(a). After detecting an operation of tapping an Add control 204 by the user, the mobile phone may add a scenario, for example, creating a home scenario or a sleep scenario. Then, if the user needs to associate the created scenario with a device, the user may switch the AI Life application to a home interface 202 shown in FIG. 1(b). The user needs to find, from a plurality of devices displayed on the home interface 202, a card of a device (for example, a switch) that needs to be associated with a scenario, and tap a card 203 of the switch to enter a setting interface of the switch. The user may set, on the setting interface of the switch, to associate the switch with a scenario (for example, the home scenario).

It can be learned that, in the scenario association process shown in FIG. 1(a) and FIG. 1(b), the user needs to repeatedly switch to a plurality of interfaces, for example, separately switch to the scenario interface and the home interface, to complete scenario association. The scenario association process is complex, and it is difficult for the user to perform an operation.

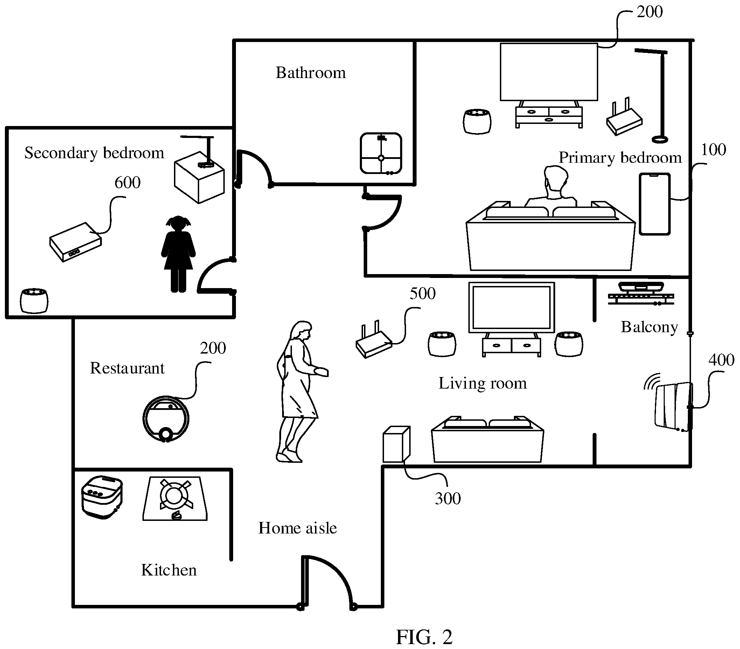

To resolve the foregoing technical problem, an embodiment of this application provides an intelligent device control method. The method is applicable to a device control system. For example, FIG. 2 is a diagram of an intelligent device control system to which the method is applicable. As shown in FIG. 2, an intelligent device control system may manage and control intelligent devices in a unit of a home (home). A home may also be referred to as a whole house, and the whole house may be divided into different spaces. For example, the whole house includes a home aisle, a kitchen, a dining room, a living room, a balcony, a primary bedroom, a secondary bedroom, a toilet, and the like.

A whole house system may include a first electronic device 100, and the first electronic device 100 has a display. The first electronic device 100 includes but is not limited to a mobile phone, a PC, a tablet computer, a smart screen, a smart home control panel (which may be referred to as a smart panel or a central display screen device for short), and the like.

In some examples, an application may be installed on the first electronic device 100, and a linkage scenario is edited by using the application. Subsequently, when a second electronic device 400 is close to the first electronic device 100, the first electronic device 100 may send information about the linkage scenario and information about the second electronic device 400 to a hub device 300. The hub device 300 may associate the linkage scenario with the second electronic device 400. Subsequently, when a user controls the second electronic device 400, the second electronic device 400 may be triggered to send an instruction to the hub device 300. After receiving the instruction, the hub device 300 may execute, based on the instruction, the linkage scenario associated with the second electronic device 400. For example, if the second electronic device 400 is a smart switch, and a linkage scenario associated with the smart switch is a home scenario, when the user taps the smart switch, the hub device 300 may control execution of the home scenario.

That the hub device 300 controls execution of the home scenario may be understood as that the hub device 300 controls a corresponding electronic device in the home scenario to perform a corresponding operation, to implement the execution of the home scenario. For example, the hub device 300 controls an air conditioner to be turned on.

Optionally, the application may be a system pre-installed application or a non-pre-installed application (for example, an application downloaded from an application market). It should be understood that the system pre-installed application includes a part of the system application (for example, a service, a component, or a plug-in in the system application), or an independent application pre-installed in the first electronic device 100. It may be understood that the independent application has an independent application icon. For example, the application may be an AI Life application.

The whole house further includes the second electronic device 400. Optionally, the second electronic device 400 supports one or more communication protocols such as Bluetooth and near field communication (near field communication, NFC). Optionally, the second electronic device 400 includes but is not limited to a smart switch, a watch, a headset, a smart home device, and the like. For example, the second electronic device 400 includes an NFC module. When a linkage scenario needs to be set for the second electronic device 400, the second electronic device 400 is enabled to be close to the first electronic device 100, and the first electronic device 100 may read information about the second electronic device 400 (for example, an identifier of the second electronic device) from the second electronic device 400 through the NFC module, and report the information about the second electronic device 400 and information about the to-be-associated linkage scenario to the hub device 300, so that the hub device 300 associates the second electronic device 400 with the linkage scenario.

Optionally, the second electronic device may be a device provided with a key/button. For example, the second electronic device includes but is not limited to a smart switch, a smart button, a watch, a headset, smart glasses, and the like. After the hub device 300 associates the second electronic device with a corresponding scenario, the user may control a corresponding key/button of the second electronic device, for the hub device 300 to control one or more target devices in the whole house to execute the scenario, to meet a scenario execution requirement of the user.

A fourth electronic device 200 (for example, an IoT device) is further disposed in the whole house. The fourth electronic device 200 may also be referred to as a controlled device, and the fourth electronic device 200 may be a device that executes a linkage scenario. For example, an electric rice cooker, an electric pressure cooker, a gas device, or the like is disposed in the kitchen. A sound box (for example, a smart sound box), a television (for example, a smart television, also referred to as a smart screen or a large screen), a routing device, or the like is disposed in the living room.

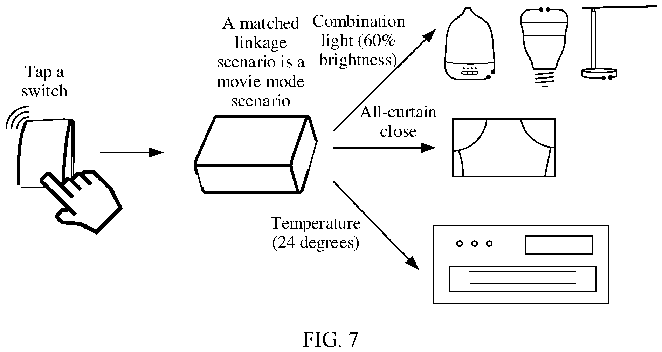

In this embodiment of this application, after detecting that the second electronic device is in contact with or is close to the first electronic device, the first electronic device may send configuration information of the linkage scenario and device information of the second electronic device to a third electronic device (for example, the hub device). In this case, the hub device may associate the second electronic device with the linkage scenario. Then, when the second electronic device meets a trigger condition, the hub device may control the fourth electronic device to execute the linkage scenario associated with the second electronic device. For example, the first electronic device is a mobile phone, the fourth electronic device is a device configured to execute a Movie mode scenario, and the second electronic device is a switch. As shown in FIG. 6(a), after the mobile phone detects that the switch is close to the mobile phone, configuration information that is of a Movie mode scenario and that is displayed on a current interface and device information (for example, a device identifier) of the switch may be sent to the hub device, and the hub device associates the switch with the Movie mode scenario. Subsequently, as shown in FIG. 7, the user taps the switch, and the switch sends a control instruction to the hub device. After receiving the control instruction, the hub device determines that the switch is associated with the Movie mode scenario. In this case, the hub device may control one or more fourth electronic devices to execute the Movie mode scenario, for example, control all curtains to be closed, control the air conditioner to adjust a room temperature to 24 degrees, and control a combination light to adjust to 60% of brightness.

It should be noted that, although only a smart television and a body fat scale in the fourth electronic device 200 are shown in FIG. 2, a person skilled in the art should know that the fourth electronic device 200 includes but is not limited to a smart home device like a smart television, a smart sound box, or a smart lamp (like a ceiling lamp, a smart table light, or a fragrance lamp). It should be noted that the fourth electronic device 200 may alternatively not be a smart home device, but a device of another type, for example, a personal computer (person computer, PC), a tablet computer, a mobile phone, or a smart remote control. A specific form of the fourth electronic device 200 is not limited in this embodiment of this application.

In some examples, a device in the fourth electronic device 200 may be used as a primary device, and is configured to control another fourth electronic device 200.

In some embodiments, there are many types of fourth electronic devices 200, and subsystems such as a lighting subsystem, an environment subsystem, and a security protection subsystem may be obtained through division based on functions of the fourth electronic devices 200. Each subsystem includes one or more devices. Each subsystem may correspond to one or more intents. The one or more intents corresponding to each subsystem may be implemented by a corresponding device in the subsystem.

In a smart home application scenario, the intent is used to express a user expectation, for example, may include: light on/off, music playing, purification disabling, purification enabling, all-curtain opening, all-curtain opening, constant temperature, and constant humidity.

For example, the lighting subsystem includes various types of lights (including but not limited to an atmosphere light). An intent corresponding to the lighting subsystem may include: all-light on, all-light off, and combination light on (where a brightness parameter is 60%).

For another example, a heating, ventilation, and air conditioning/refrigeration subsystem includes various devices that can adjust a temperature and humidity, and an intent corresponding to the heating, ventilation, and air conditioning/refrigeration subsystem includes a constant temperature intent, a constant humidity intent, a constant net intent, and the like.

For another example, a sunshade subsystem includes various apparatuses that can implement sunshade, and intents that can be implemented by the sunshade subsystem include: all-curtain opening and all-curtain close.

It can be learned from the foregoing description that each intent may be implemented by one or more devices. Each device may implement one or more intents. For example, an intent of adjusting light may be implemented by a lamp and/or a curtain. For the curtain, the curtain can not only implement the intent of adjusting light, but also implement intents of sunshade and sun protection. A plurality of devices that implement each intent may be devices in a same space or different spaces. For example, a device that implements the intent of turning on the combination light may include a floor lamp in a living room, a ceiling lamp in a restaurant, and the like.

After determining an intent of the user and determining the fourth electronic device 200 that the user needs to control, the first electronic device 100 may indicate the fourth electronic device 200 to execute the intent of the user. For example, if a scenario to be controlled by the first electronic device for execution includes the intent of turning on the light, the first electronic device may indicate, based on the intent of turning on the light, the fourth electronic device 200 to execute the intent of turning on the light.

In this embodiment of this application, a plurality of devices in one or more subsystems can be freely combined into one super terminal. Devices can function as a functional module of each other to implement mutual capability assistance and resource sharing.

The whole house further includes the hub device 300. The hub device 300 is also referred to as a hub, a central control system, an intelligent host, a host, or the like. Optionally, hub devices in rooms or areas and hub devices in the whole house may exist independently, or may be integrated with the fourth electronic device, the first electronic device, or the like into one device, or may be a device in another form. This is not limited in this application.

In some examples, the hub device 300 supports automatic discovery and access of some electronic devices, for example, supports automatic discovery and access of a wireless smart switch/button control device.

In some examples, the hub device 300 may include an artificial intelligence (artificial intelligence, AI) hub module. The hub device 300 may determine, through the AI hub module, a linkage scenario that the user wants to execute, and send a control instruction to a corresponding fourth electronic device 200, to implement the linkage scenario.

Optionally, in an example, the system further includes a routing device 500 (for example, a router). The routing device is configured to: connect to a local area network or the Internet, and select and set a path for sending a signal by using a specific protocol. The first electronic device 100, the fourth electronic device 200, the hub device 300, and the second electronic device 400 may access a router, and perform data transmission with a device in the local area network or a device in the Internet through a Wi-Fi channel established by the router. In an implementation, the hub device 300 and the routing device may be integrated into one device. For example, the hub device 300 and the routing device are integrated into a routing device, that is, the routing device has a function of the hub device 300. The routing device may be one or more routing devices in a parent-child routing device, or may be an independent routing device.

Optionally, in an example, the system further includes a gateway 600. Optionally, the fourth electronic device 200 and the second electronic device 400 may access the routing device through a gateway.

The foregoing content is merely an example of a system to which the device control method is applicable. The system may further include more or fewer devices, different device layout locations, or the like.

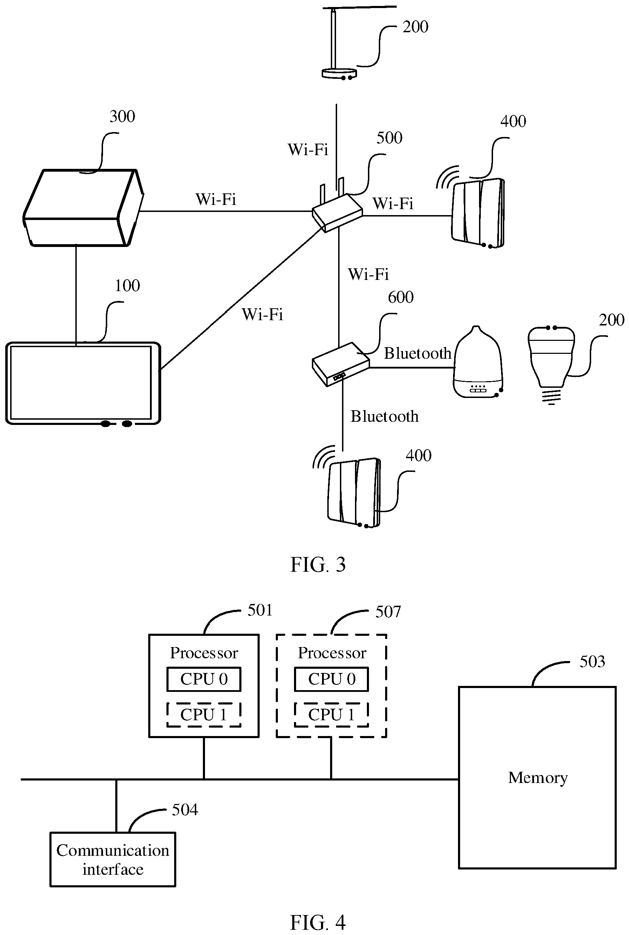

Connections may be established between the plurality of devices by using various feasible communication protocols, to implement the technical solutions in embodiments of this application. For example, the first electronic device 100 is a smart panel, the fourth electronic device 200 is a smart home device, the second electronic device 400 is a smart switch, and the routing device 500 is a router. FIG. 3 shows a possible connection manner between devices. A router 300, the smart home device 200, the smart switch 400, the gateway 600, and the smart panel 100 may be connected to a router 500 through Wi-Fi. In some examples, the smart home device 400 may further access the gateway 600 through Bluetooth, to access the router 500 through the gateway 600. In some examples, the smart switch 400 may further access the gateway 600 through Bluetooth, to access the router 500 through the gateway 600. In some examples, the hub device 300 may be connected to the smart panel 100 in a programmable logic controller (programmable logic control, PLC) manner. The connection relationship shown in FIG. 3 is merely an example. It should be understood that a connection may alternatively be established between devices in another manner. A specific connection manner between the devices is not limited in this embodiment of this application.

In addition to the smart home scenario mentioned above, the technical solutions in the foregoing embodiments may also be applicable to some other scenarios, for example, the technical solutions in the foregoing embodiments may also be applicable to travel and office scenarios.

Optionally, the first electronic device 100, the fourth electronic device 200, and the hub device 300 in this embodiment of this application may be implemented by using different devices, for example, implemented by using a device in FIG. 4. FIG. 4 is a diagram of a hardware structure of a device according to an embodiment of this application. The device includes at least one processor 501, a memory 503, and at least one communication interface 504. The memory 503 may be further included in the processor 501.

It may be understood that the structure shown in this embodiment of this application does not constitute a specific limitation on an electronic device. In some other embodiments of this application, the electronic device may include more or fewer components than those shown in the figure, or some components may be combined, or some components may be split, or different component arrangements may be used. The illustrated components may be implemented in hardware, software, or a combination of software and hardware.

The processor 501 may be a general-purpose central processing unit (central processing unit, CPU), a microprocessor, an application-specific integrated circuit (application-specific integrated circuit, ASIC), or one or more integrated circuits configured to control program execution of the solutions of this application.

There may be a communication line between the foregoing components, and the communication line may include a path for transmitting information between the foregoing components.

The communication interface 504 is configured to communicate with another device. In this embodiment of this application, the communication interface may be a module, a circuit, a bus, an interface, a transceiver, or another apparatus that can implement a communication function, and is configured to communicate with another device. Optionally, when the communication interface is a transceiver, the transceiver may be an independently disposed transmitter, and the transmitter may be configured to send information to another device. Alternatively, the transceiver may be an independently disposed receiver, and is configured to receive information from another device. Alternatively, the transceiver may be a component that integrates functions of sending and receiving information. Specific implementation of the transceiver is not limited in this embodiment of this application.

The memory 503 may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only memory, CD-ROM), or another optical disc storage, an optical disc storage (including a compact disc, a laser disc, an optical disc, a digital versatile disc, a Bluray disc, and the like), a magnetic disk storage medium or another magnetic storage device, or any other medium that can be used to carry or store expected program code in a form of an instruction or a data structure and that can be accessed by a computer, but is not limited thereto. The memory may exist independently, and is connected to the processor through a communication line. Alternatively, the memory may be integrated with the processor.

The memory 503 is configured to store computer-executable instructions used to implement the solutions of this application, and the processor 501 controls execution of the computer-executable instructions. The processor 501 is configured to execute the computer-executable instructions stored in the memory 503, to implement a method provided in the following embodiments of this application.

Optionally, the computer-executable instructions in this embodiment of this application may also be referred to as application code, instructions, a computer program, or another name. This is not specifically limited in this embodiment of this application.

During specific implementation, in an embodiment, the processor 501 may include one or more CPUs, for example, a CPU 0 and a CPU 1 in FIG. 4.

During specific implementation, in an embodiment, the electronic device may include a plurality of processors, for example, the processor 501 and a processor 507 in FIG. 4. Each of the processors may be a single-core (single-CPU) processor, or may be a multi-core (multi-CPU) processor. The processor herein may be one or more devices, circuits, and/or processing cores configured to process data (for example, computer program instructions).

It may be understood that the structure shown in FIG. 4 does not constitute a specific limitation on an electronic device. In some other embodiments of this application, the electronic device may include more or fewer components than those shown in the figure, or some components may be combined, or some components may be split, or different component arrangements may be used. The illustrated components may be implemented in hardware, software, or a combination of software and hardware.

The device shown in FIG. 4 may be a general-purpose device or a dedicated device. A type of the device is not limited in this embodiment of this application. For example, the device is a smart panel, and is a dedicated device configured to control a smart home device. For another example, the device is a mobile phone, and is a general-purpose device that can control a smart home device.

Optionally, a software system of the electronic device (for example, a first electronic device, a fourth electronic device, a server, or a hub device) may use a layered architecture, an event-driven architecture, a microkernel architecture, a micro service architecture, or a cloud architecture. In this embodiment of the present invention, an Android^{®} system with a layered architecture is used as an example to describe the software structure of the electronic device.

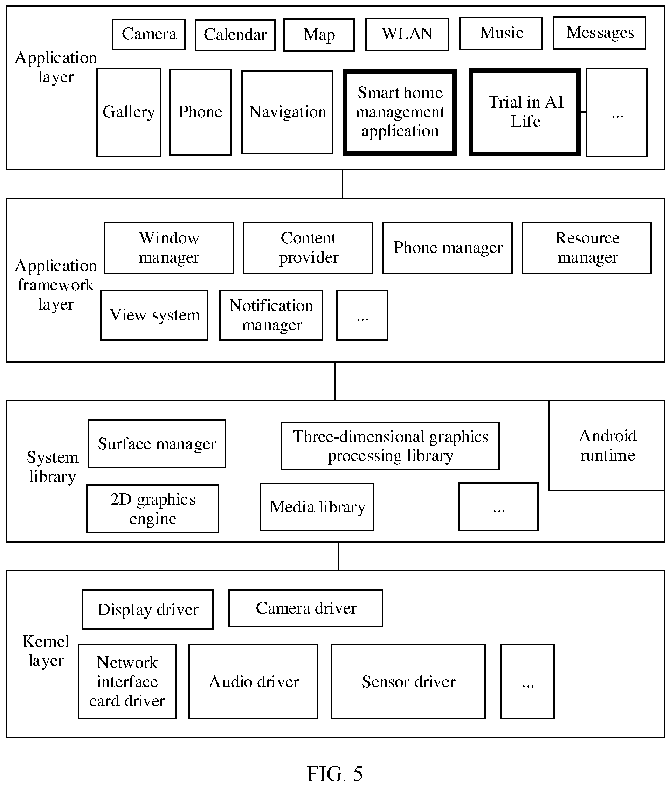

The first electronic device is used as an example. FIG. 5 is a block diagram of a software structure of the first electronic device 100 according to an embodiment of the present invention.

In a layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of applications.

As shown in FIG. 5, the application may include applications such as Camera, Gallery, Calendar, Call, Map, Navigation, WLAN, Bluetooth, Music, Videos, and Messages.

In this embodiment of this application, the application further includes a smart home management application and a basic service. The basic service opens a management capability of an intelligent device to the system. The smart home management application may invoke the basic service to query a to-be-controlled smart home device, and/or invoke the basic service to control the smart home device.

For example, the smart home management application may be an AI Life application. The smart home application may alternatively be another application having a similar function. The smart home management application may be a system original application, or may be a third-party application. A type of the smart home management application is not limited in this embodiment of this application. In the following embodiments, the AI Life application is mainly used as an example for description.

The application framework layer provides an application programming interface (application programming interface, API) and a programming framework for an application at the application layer. The application framework layer includes some predefined functions.

As shown in FIG. 5, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like. The content provider is configured to: store and obtain data, and enable the data to be accessed by an application. The data may include a video, an image, audio, calls that are made and answered, a browsing history and bookmarks, an address book, and the like. The view system includes visual controls such as a control for displaying a text and a control for displaying an image. The view system may be configured to construct an application. A display interface may include one or more views. For example, a display interface including an SMS message notification icon may include a text display view and an image display view. The phone manager is configured to provide a communication function for the first electronic device 100, for example, management of a call status (including answering, declining, or the like). The resource manager provides various resources such as a localized character string, an icon, an image, a layout file, and a video file for an application. The notification manager enables the application to display notification information in the status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is displayed in the status bar, an announcement is given, a terminal vibrates, or an indicator light blinks.

The Android runtime includes a core library and a virtual machine. The Android runtime is responsible for scheduling and management of an Android system. The core library includes two parts: a function function that needs to be invoked by the Java language and an Android core library. The application layer and the application framework layer run in the virtual machine. The virtual machine executes java files at the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a 2D graphics engine (for example, SGL). The surface manager is configured to manage a display subsystem and provide fusion of 2D and 3D layers for a plurality of applications. The media library supports playback and recording in a plurality of commonly used audio and video formats, and static image files. The media library may support a plurality of audio and video coding formats, for example, MPEG 4, H.264, MP3, AAC, AMR, JPG, and PNG. The three-dimensional graphics processing library is configured to implement three-dimensional graphics drawing, image rendering, synthesis, layer processing, and the like. The 2D graphics engine is a drawing engine for 2D drawing.

The kernel layer is a layer between hardware and software. The kernel layer includes at least a display driver, a camera driver, an audio driver, and a sensor driver.

It should be noted that the software architecture shown in FIG. 5 is merely a software architecture applicable to the electronic device. The software architecture of the electronic device is not limited in this embodiment of this application. Optionally, some functional modules may be located at layers different from those shown in FIG. 5. For example, the basic service may alternatively be disposed at the framework layer. This embodiment of this application is not limited thereto.

The following mainly describes the intelligent device control method provided in this embodiment of this application by using an example in which the first electronic device 100 is an intelligent device control panel (which may be referred to as a smart panel for short).

In some embodiments, the electronic device may access a local area network of a whole house. For example, network configuration is performed for the smart switch by using the smart panel. The smart panel has accessed to a router, and it is detected that a user enables the smart switch to be close to the smart panel. In this case, the smart panel may display a network configuration card of the smart switch. If the user indicates to perform network configuration on the smart switch, the smart panel may control the smart switch to implement network configuration.

In a possible implementation, in a network configuration process, the hub device may authenticate a to-be-accessed smart switch by using a whitelist mechanism. The smart switch is allowed to access the local area network of the whole house only when the smart switch meets a condition specified in the whitelist. Otherwise, the smart switch is not allowed to access the local area network. For example, the whitelist specifies that devices that log in to a same account can access the local area network of the whole house, and a device that logs in to another account cannot access the local area network of the whole house.

The foregoing network configuration manner of the electronic device is merely an example. The network configuration manner of the electronic device may alternatively be another manner. A manner in which the electronic device accesses a whole-house network is not limited in this embodiment of this application.

After accessing the whole-house network, the electronic device may be associated with a corresponding linkage scenario, so that the electronic device subsequently triggers execution of the linkage scenario, to meet an execution requirement of the user for the linkage scenario. For example, as shown in FIG. 6(a), the user opens an interface 601 of a successfully edited "Movie mode" scenario on the smart panel. The "Movie mode" scenario includes a combination light (60% brightness) intent 602, a temperature (24 degrees) intent 603, and an all-curtain close intent 604. Each intent may be implemented by one or more devices. The smart panel controls execution of the "Movie mode" scenario, that is, controls devices that can implement the combination light (60% brightness) intent, the temperature (24 degrees) intent, and the all-curtain close intent to perform corresponding actions. For example, when a condition for executing the "Movie mode" scenario is met (for example, the user taps a card of the "Movie mode" scenario), the smart panel controls a light 1 and a light 2 to implement an intent that brightness of the combination light is 60%, and controls an air conditioner to implement an intent that a room temperature is 24 degrees, and controls all curtains to be closed.

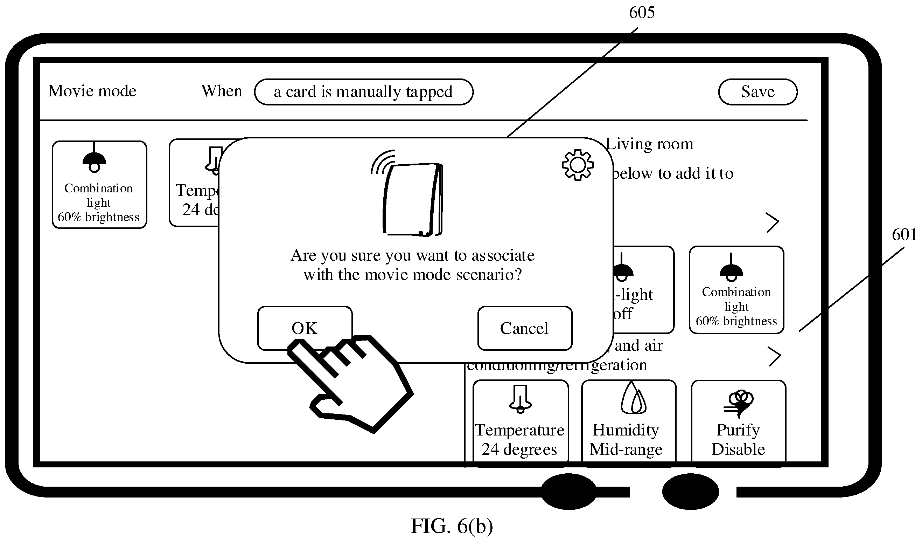

In this embodiment of this application, as shown in FIG. 6(a), the user enables a smart switch that has accessed a local area network to be close to the smart panel. After the smart panel finds that the smart switch is close to, as shown in FIG. 6(b), a prompt window 605 may be displayed. The prompt window 605 is used to prompt the user whether to associate the "Movie mode" scenario with the smart switch.

After the user taps an OK button in the prompt window 605 (second prompt information may be presented in the prompt window 605), the smart panel may obtain device information of the smart switch. Optionally, the device information includes but is not limited to a device type and a device identifier. The smart panel may send related configuration information of the "Movie mode" scenario and the device information of the smart switch to a hub device. The hub device may associate the smart switch with the "Movie mode" scenario based on the related configuration information of the "Movie mode" scenario and the device information of the smart switch.

Optionally, the hub device may store the related configuration information of the "Movie mode" scenario in a database. Optionally, the hub device may further store an association relationship between the smart switch and the "Movie mode" scenario. For example, as shown in Table 1, the hub device stores the association relationship between the smart switch and the "Movie mode" scenario.

**Table 1**

| | |
|---|---|
| Linkage scenario | Associated device |
| Movie mode scenario | Smart switch |
| ... | ... |

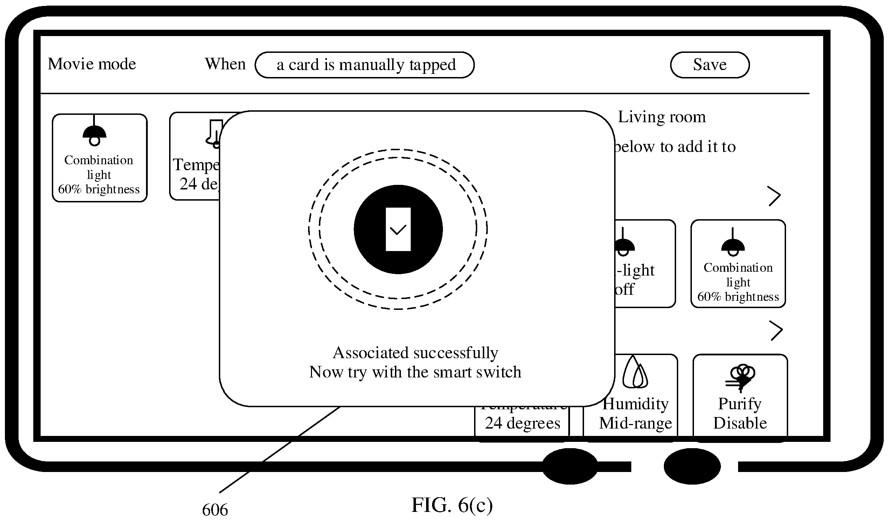

As shown in FIG. 6(c), after the smart switch is successfully associated with the "Movie mode" scenario, the smart panel may display a prompt window 606, and the prompt window 606 is used to prompt that the association succeeds.

In this embodiment of this application, the linkage scenario associated with the smart switch may be triggered by tapping/approaching the smart panel by using the smart switch. The user does not need to switch to a plurality of configuration interfaces (for example, a scenario interface and a home interface) to associate the device with a scenario, so that operation complexity of the user can be reduced, and operation duration in the association linkage scenario is shortened.

After the smart switch is successfully associated with the "Movie mode" scenario, the user may quickly trigger, by using the smart switch, a corresponding device to execute the "Movie mode" scenario. For example, as shown in FIG. 7, the user taps/presses the smart switch, to trigger the smart switch to send a control instruction to the hub device. After receiving the control instruction, the hub device may determine, by querying Table 1, that the smart switch is associated with the "Movie mode" scenario.

Then, the hub device may query the configuration information of the "Movie mode" scenario in the database, and determine, based on the configuration information of the "Movie mode" scenario, that the "Movie mode" scenario includes the combination light (60% brightness) intent and the all-curtain close intent, and the temperature (24 degrees) intent, and determine a plurality of target devices that can implement the intent of combination light (60% brightness), the all-curtain close intent, and the temperature (24 degrees) intent. Then, the hub device may send control instructions to the plurality of target devices, to control the plurality of target devices to separately execute corresponding control instructions, to implement the "Movie mode" scenario.

The foregoing mainly uses an example in which the scenario is executed at an intent granularity for description. In some other embodiments, the scenario is also executed at a device granularity. Specific implementations of a scenario and configuration information of the scenario are not limited in this embodiment of this application. For example, it is assumed that the switch is associated with the Movie mode scenario, and the Movie mode scenario corresponds to turning off the light 1 and turning on an atmosphere light 2. After detecting that the user taps the switch, the switch may send a control instruction to the hub device. The hub device may determine that the switch is associated with the Movie mode scenario, and determine, based on the configuration information of the Movie mode scenario, that the Movie mode scenario corresponds to turning off the light 1 and turning on the atmosphere light 2. Based on this, the hub device may control the light 1 to be turned off, and control the atmosphere light 2 to be turned on, to implement execution of the Movie mode scenario.

In this embodiment of this application, the user may quickly and conveniently control, by controlling the smart switch, a plurality of devices in the whole house to execute the linkage scenario associated with the smart switch, and the user does not need to control the plurality of devices in the linkage scenario one by one. Therefore, user operations can be simplified, and device operation control efficiency can be improved.

In addition, because the plurality of devices involved in the linkage scenario may cross spaces, the user does not need to move in a plurality of spaces to control the plurality of devices in the plurality of spaces, and only needs to control, by controlling the smart switch, the plurality of devices to execute the linkage scenario. This greatly simplifies user operations.

In some embodiments, after associating the smart switch with a linkage scenario, the user may further modify the linkage scenario associated with the smart switch. For example, if the smart switch is associated with the "Movie mode" scenario, the user may open an AI Life application on the smart panel, and open an editing interface of a "Go home" scenario. Then, the user enables the smart switch to be close to the smart panel, to trigger the smart panel to report configuration information of the "Go home" scenario and the device information of the smart switch to the hub device. The hub device associates the "Go home" scenario with the smart switch based on the configuration information and the device information. Subsequently, when the user presses the smart switch, the smart switch sends a control instruction to the hub device, for the hub device to control the plurality of target devices in the whole house to execute the "Go home" scenario associated with the smart switch.

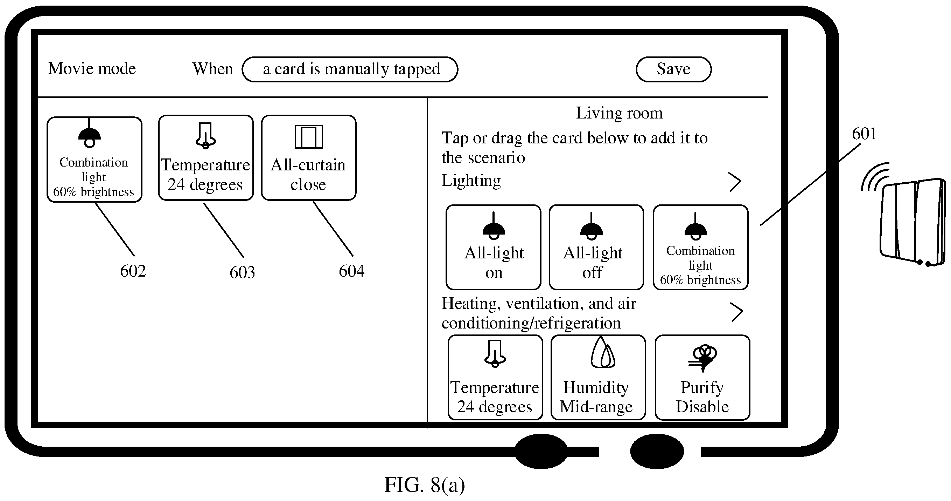

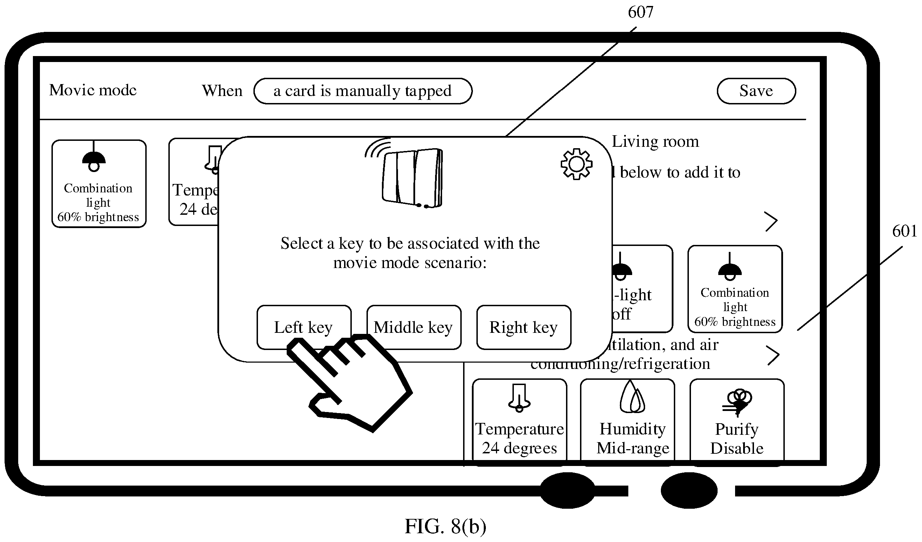

The foregoing uses an example in which the smart switch is provided with a single key for description. In some other embodiments, the smart switch may alternatively be provided with a plurality of keys. In this case, the user may set a key used to associate a linkage scenario. For example, as shown in FIG. 8(a), it is detected that the smart switch is close to the smart panel, and the smart panel reads the device information of the smart switch, and learns, based on the device information, that the smart switch is provided with three keys. As shown in FIG. 8(b), the smart panel may display a prompt window 607, to prompt the user to select a key to be associated with the "Movie mode" scenario. A button corresponding to each key of the smart switch may be displayed in the prompt window 607.

As shown in FIG. 8(b), it is assumed that the user taps a "Left key" button in the prompt window 607. The smart panel may synchronize information about tapping the "Left key" button by the user, the configuration information of the "Movie mode" scenario, and the device information of the smart switch to the hub device. After receiving the information reported by the smart panel, the hub device may associate the left key of the smart switch with the "Movie mode" scenario. Optionally, the hub device may store the configuration information of the "Movie mode" scenario. Optionally, the hub device may further store an association relationship between the left key of the smart switch and the "Movie mode" scenario. For example, as shown in Table 2, the hub device stores the association relationship between the left key of the smart switch and the "Movie mode" scenario.

**Table 2**

| | |
|---|---|
| Linkage scenario | Associated device |
| Movie mode scenario | Left key of the smart switch |
| Go home scenario | Middle key of the smart switch |
| Sleep scenario | Right key of the smart switch |
| ... | ... |

Similarly, the hub device may associate another key of the smart switch with a corresponding linkage scenario. For example, the middle key of the smart switch is associated with the go home scenario, and the right key of the smart switch is associated with the sleep scenario.

After a corresponding key of the smart switch is associated with a corresponding scenario, the user may tap the corresponding key of the smart switch, so that the smart switch sends a control instruction to the hub device, and the hub device controls one or more target devices in the whole house to execute the scenario associated with the key.

For example, as shown in (a) in FIG. 9, the user presses the left key of the smart switch, to trigger the smart switch to send a control instruction to the hub device. The control instruction may carry information about a key operation performed by the user on the smart switch. After receiving the control instruction, the hub device may learn that the user presses the left key of the smart switch. The hub device may learn, by querying Table 2, that the left key of the smart switch is associated with the "Movie mode" scenario. In this case, the hub device may control one or more target devices in the whole house to execute the "Movie mode" scenario, to implement one or more intents included in the "Movie mode" scenario. For example, as shown in (a) in FIG. 9, it is assumed that the Movie mode scenario is associated with an all-light off intent, the all-curtain close intent, and an intent of a temperature of 28 degrees. When determining that the Movie mode scenario needs to be executed, the hub device may send control instructions to the light 1 and the light 2, to turn on the light 1 and the light 2 to achieve the intent of the combination light of 60% brightness. The hub device may further send control instructions to the curtains in the whole house, to close the curtains in the whole house, to implement the all-curtain close intent. The hub device may further send a control instruction to a temperature regulating device (for example, an air conditioner), to implement an intent of a temperature of 24 degrees.

Alternatively, the Movie mode scenario is directly associated with the light 1, the light 2, the curtains in the whole house, and the air conditioner. When determining that the Movie mode scenario needs to be executed, the hub device respectively sends control instructions to the light 1, the light 2, the curtains in the whole house, and the air conditioner, to execute the Movie mode scenario.

For another example, as shown in (b) in FIG. 9, when the user presses the right key of the smart switch, the hub device may be triggered to control one or more target devices in the whole house to execute the sleep scenario associated with the right key. It can be learned that, when controlling to execute the sleep scenario, the user only needs to press the right key of the smart switch to control the plurality of target devices in the whole house, and does not need to control the target devices one by one. This can reduce operation complexity of the user, and improve efficiency of executing the linkage scenario.

In some embodiments, the smart switch may be provided with a display. After the smart switch is associated with the corresponding linkage scenario, the hub device may send information about the linkage scenario (for example, a name of the linkage scenario) to the smart switch. The smart switch may display the information about the linkage scenario on the display. For example, as shown in FIG. 10A, the smart switch may display the "Movie mode" scenario on a display corresponding to the left key, display the "Go home" scenario on a display corresponding to the middle key, and display the "Sleep" scenario on a display corresponding to the right key. In this way, the user can clearly learn, by using the scenario name displayed on the display, a linkage scenario associated with each key, to quickly and conveniently control a corresponding key to execute a corresponding linkage scenario.

The foregoing mainly uses an example in which one key is associated with one linkage scenario. In some embodiments, one key may alternatively be associated with a plurality of linkage scenarios. For example, in the foregoing solution, the left key of the smart switch is associated with the "Movie mode" scenario and a "Leave home mode" scenario. As shown in (a) in FIG. 10B, when the user presses the left key of the switch, the target device in the whole house may be controlled to execute the "Movie mode" scenario. As shown in (b) in FIG. 10B, when the user presses the left key of the switch next time, the target device in the whole house may be controlled to execute the "Leave home mode" scenario. In this way, a same key of the smart switch may be reused at different moments, so that as many as possible linkage scenarios can be associated with the switch in a scenario in which a quantity of keys of the switch is limited, to meet a requirement of the user for executing the linkage scenario.

It may be understood that a quantity of smart switches configured in a home scenario, a quantity of keys of the smart switch, and a quantity of scenarios associated with one key of the smart switch are not limited in this embodiment of this application.

The foregoing uses an example in which the smart switch is used as an entry device (a second electronic device) for controlling of executing the linkage scenario. In some embodiments, the second electronic device may alternatively be another device. For example, the second electronic device may be another device provided with a button or a key, or may be any other device that can be configured to trigger execution of the linkage scenario. In this way, entries of quick control of a whole-house smart linkage scenario can be enriched, and the user can quickly and conveniently control to execute the linkage scenario by using a plurality of devices in a plurality of ways. For example, FIG. 11 shows some possible implementation forms of the second electronic device.

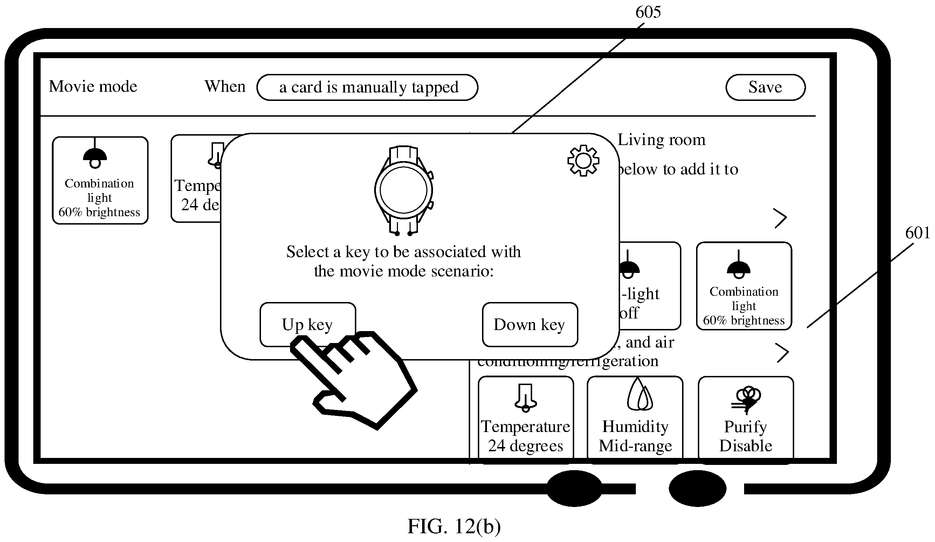

For example, the second electronic device is a watch, and a first electronic device is a smart panel. For example, as shown in FIG. 12(a), the smart panel displays an interface 601 in a "Movie mode" scenario. The watch is close to/taps a mobile phone. As shown in FIG. 12(b), the smart panel detects an approaching/tapping operation of the watch, and displays a prompt window 605. The prompt window 605 may present a watch key to be associated with the "Movie mode" scenario. After the user selects and taps an "Up key" button in the prompt window 605, if the smart panel determines that the user wants to associate the up key of the watch with the "Movie mode" scenario, the smart panel may report, to a hub device, configuration information of the "Movie mode" scenario and information indicating that the user selects the up key of the watch as an associated key, and the hub device associates the up key of the watch with the "Movie mode" scenario. After the up key of the watch is associated with the "Movie mode" scenario, the hub device may send a notification message to the watch, where the notification message may carry capability information of the "Movie mode" scenario and information about the key associated with the scenario, and the watch may receive and store the capability information and the information about the associated key. For example, Table 3 shows an example of the capability information and the information about the associated key that are stored in the watch.

**Table 3**

| | |
|---|---|
| Capability information | Associated key |
| Movie mode scenario | Up key |

The watch may learn, by querying Table 3, that the up key of the watch has a capability of triggering execution of the "Movie mode" scenario. Based on this, subsequently, when the user taps the up key of the watch, a control instruction may be sent to the hub device, and the control instruction may carry information indicating that the user presses the up key of the watch. After receiving the control instruction, the hub device may determine, based on a fact that the key of the watch pressed by the user is the up key, that a scenario associated with the up key of the watch is the "Movie mode" scenario, and accordingly control one or more target devices in the whole house to execute the "Movie mode" scenario.

In this way, the user can conveniently control a whole-house linkage scenario by operating the key of the watch.

In addition, in this solution, even if the user is outdoors, the user can conveniently and quickly perform remote control to execute the whole-house linkage scenario. For example, the user sets the up key of the watch to be associated with the leave home scenario and a down key to be associated with a child mode scenario. When the user is not at home, the user may control, by pressing the up key of the watch, one or more target devices at home to execute the leave home scenario, for example, close an anti-theft door and turn off a light at home. The user may control, by pressing the down key of the watch, a target device at home to execute the child mode scenario, for example, power off a dangerous household appliance.

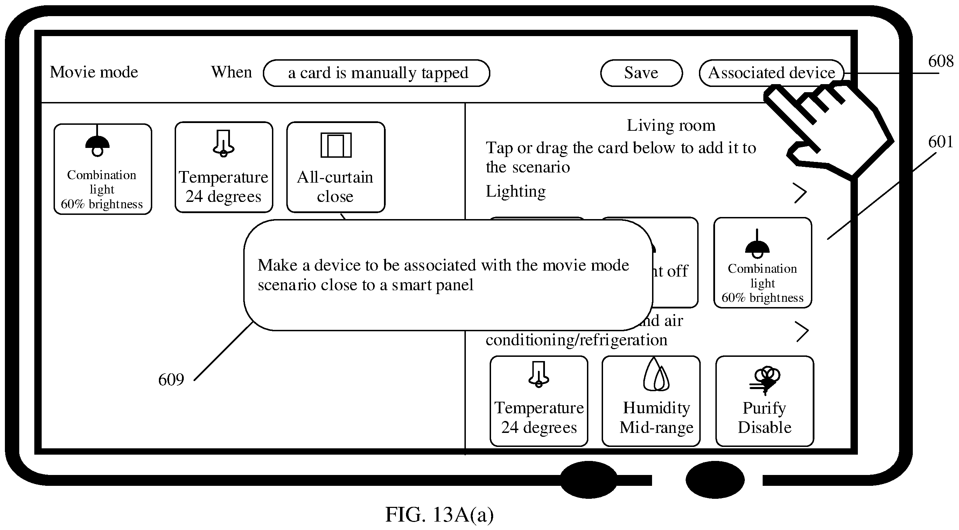

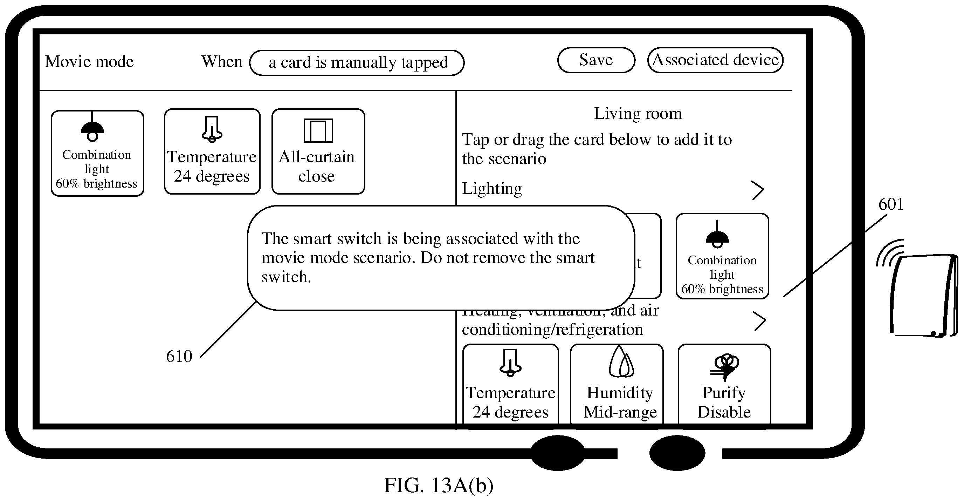

The foregoing mainly uses an example in which the user actively enables the smart switch to be close to the smart panel to trigger a scenario association procedure. In some embodiments, the smart panel may prompt the user to enable an electronic device like the smart switch to be close to the smart panel, to create an association relationship between the electronic device and a scenario. For example, as shown in FIG. 13A(a), the interface 601 may further include an associated device button 608. After it is detected that the user taps the associated device button 608, the smart panel may display a prompt window 609 (an example of first prompt information), to prompt the user to enable an electronic device that needs to be associated with the "Movie mode" scenario to be close to or tap the smart panel. After it is detected that the smart switch is close to, the smart panel may report device information (for example, a device identifier) of the smart switch and configuration information of the "Movie mode" scenario to the hub device, and the hub device associates the smart switch with the "Movie mode" scenario. As shown in FIG. 13A(b), after it is detected that the smart switch is close to, the smart panel may further display a prompt window 610, to provide a prompt "The smart switch is being associated with the "Movie mode" scenario. Do not remove the smart switch."

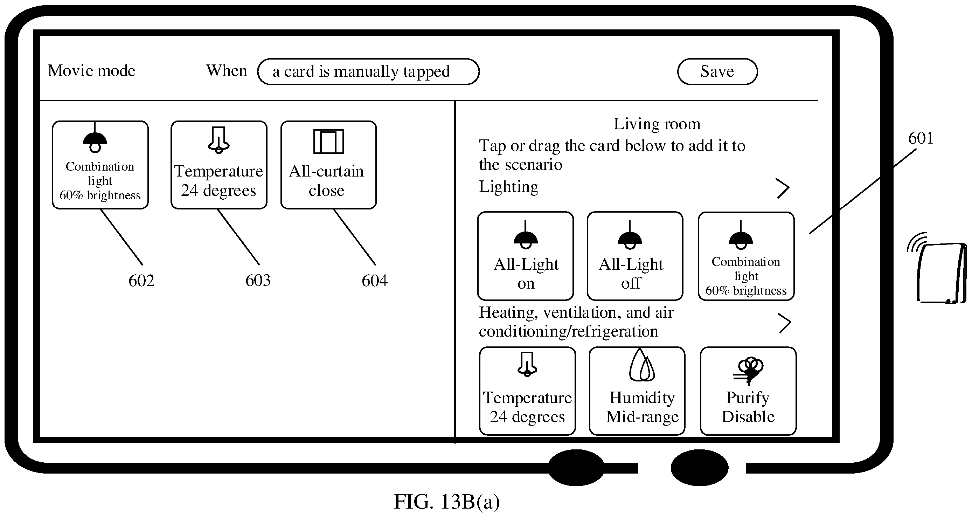

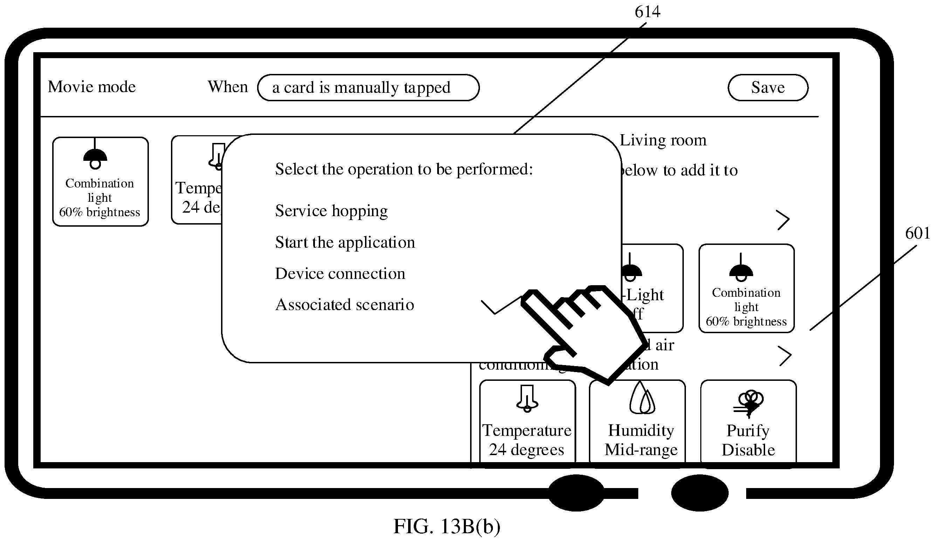

In some other embodiments, after the user enables the smart switch to be close to the smart panel, the smart panel may prompt the user with an operation that can be performed. For example, as shown in FIG. 13B(a), the smart panel detects that the smart switch is close to. As shown in FIG. 13B(b), the smart panel displays a prompt window 614, and the prompt window 614 may include the operation that can be performed, for example, service hopping, application startup, device connection, or scenario association. After it is detected that the user selects the option of the scenario association, the smart panel may start a scenario association procedure according to the technical solution in the foregoing embodiment, so that the hub device associates the smart switch with the "Movie mode" scenario.

The foregoing mainly uses an example in which a device provided with a button/key is used as a device (the second electronic device) that triggers execution of a linkage scenario. In some other embodiments, the second electronic device may alternatively be a device not provided with a button/key. For example, as shown in FIG. 14(a), the smart panel displays an interface 601 in a "Leave home mode" scenario. After it is detected that a camera is close to the smart panel, the smart panel displays a prompt window 605 shown in FIG. 14(b), to prompt the user whether to confirm to associate the camera with the "Leave home mode" scenario. Optionally, a setting button 611 may be further set in the prompt window 605. After it is detected that the user taps the setting button 611 in the prompt window 605, the smart panel may display a window 612 shown in FIG. 14(c), and the window 612 may include an Add control 613.

The user may set, by using the Add control 613, the camera to trigger an event for executing the "Leave home mode" scenario. It is assumed that a trigger event set by the user is "Leave home". After setting the trigger event, the user may tap an OK button in the window 612. Then, the smart panel may jump back to the window 605 shown in FIG. 14(b). If it is detected that the user taps an OK button in the window 605, and the smart panel determines that the user wants to associate the camera with the "Leave home mode" scenario, the smart panel may report configuration information of the "Leave home mode" scenario, device information (for example, a device identifier) of the camera, and information about the trigger event (an event that the user leaves home) to the hub device. The hub device may store the configuration information of the "Leave home mode" scenario. The hub device may further store an association relationship between the camera, the trigger event, and the "Leave home mode" scenario.

For example, the hub device stores an association relationship shown in Table 4.

**Table 4**

| | | |
|---|---|---|
| Trigger event | Associated device | Linkage scenario |
| The user leaves home | Camera | Leave home mode scenario |

Optionally, after the camera is associated with the "Leave home mode" scenario, the hub device may send a notification message to the camera. The notification message may carry capability information of the "Leave home mode" scenario and information about a trigger event used to trigger execution of the scenario. The camera may receive and store the capability information and the information about the trigger event. For example, Table 5 shows an example of the capability information and the trigger event that are stored in the camera.

**Table 5**

| | |
|---|---|
| Capability information | Trigger event |
| Leave home mode scenario | The user leaves home |

The camera may learn, by querying Table 5, that the event that the user leaves home has a capability of triggering execution of the "Leave home mode" scenario. Based on this, subsequently, when detecting that the user leaves home, the camera may send a control instruction to the hub device, where the control instruction may indicate that the event that the user leaves home is detected. After receiving the control instruction, the hub device may determine that a scenario associated with the event that the user leaves home is the "Leave home mode" scenario, and accordingly control one or more target devices in the whole house to execute the "Leave home mode" scenario, for example, control all lights to be turned off and all curtains to be closed in the whole house.

The foregoing mainly uses an example in which the smart panel is the first electronic device for description. It should be understood that, in some other embodiments, the first electronic device may alternatively be another device provided with a display. For example, a smart screen, a mobile phone, and a tablet also support the foregoing technical solution. When the second electronic device (for example, a smart switch) is close to/taps the device with the display, a linkage scenario between the second electronic device and the device with the display may be associated. Subsequently, a corresponding linkage scenario may be controlled and executed by using the second electronic device.

It should be noted that the foregoing plurality of embodiments may be combined, and a combined solution is implemented. Optionally, some operations in procedures of the foregoing method embodiments are randomly combined, and/or a sequence of some operations is randomly changed. In addition, an execution sequence between steps of each process is merely an example, and does not constitute a limitation on an execution sequence between the steps. The steps may alternatively be performed in another execution sequence. It is not intended to indicate that the execution order is the only order in which these operations can be performed. A person of ordinary skill in the art may learn various manners of permutating the operations described in this specification. In addition, it should be noted that process details related to an embodiment in this specification are also applicable to another embodiment in a similar manner, or different embodiments may be used in combination.

In addition, some steps in the method embodiments may be equivalently replaced with other possible steps. Alternatively, some steps in the method embodiments may be optional, and may be deleted in some use scenarios. Alternatively, another possible step may be added to the method embodiments. Alternatively, execution bodies (for example, a functional module) of some steps in the method embodiments may be replaced with other execution bodies.

In addition, the method embodiments may be implemented separately or in combination.

For example, after the second electronic device (for example, a switch) is close to or is in contact with the first electronic device (for example, a smart panel), the second electronic device may alternatively report device information of the second electronic device to the hub device, the first electronic device reports configuration information of an associated scenario to the hub device, and the hub device associates the second electronic device with the associated scenario.

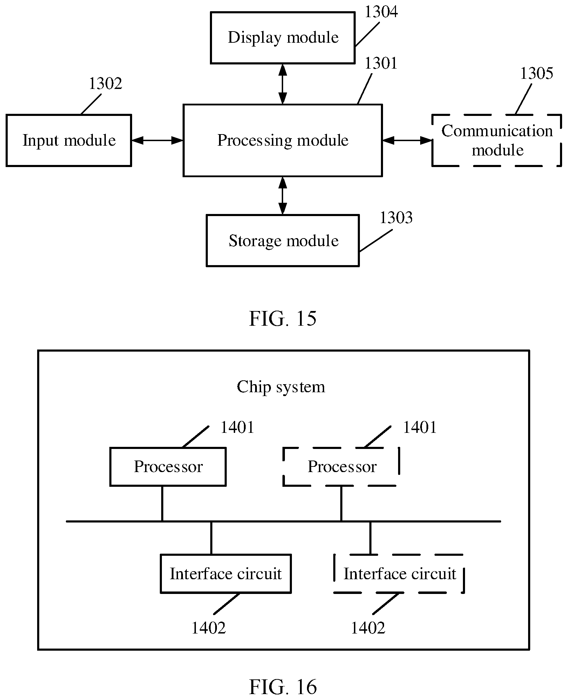

Some other embodiments of this application provide an apparatus. The apparatus may be the first electronic device, the second electronic device, the third electronic device, the fourth electronic device, or the like. The apparatus may include a display, a memory, and one or more processors. The display, the memory, and the processor are coupled. The memory is configured to store computer program code, where the computer program code includes computer instructions. When the processor executes the computer instructions, the apparatus may perform functions or steps performed by the mobile phone in the foregoing method embodiments. For a structure of the apparatus, refer to the electronic device (apparatus) shown in FIG. 15.

A core structure of the apparatus may be represented as a structure shown in FIG. 15. The apparatus includes a processing module 1301, an input module 1302, a storage module 1303, and a display module 1304.

The processing module 1301 may include at least one of a central processing unit (CPU), an application processor (Application Processor, AP), or a communication processor (Communication Processor, CP). The processing module 1301 may perform an operation or data processing related to control and/or communication of at least one of other elements of a user electronic device. Specifically, the processing module 1301 may be configured to control, based on a specific trigger condition, content displayed on a primary screen. The processing module 1301 is further configured to process an input instruction or input data, and determine a display style based on processed data.

The input module 1302 is configured to obtain instructions or data input by the user, and transmit the obtained instructions or data to another module of the electronic device. Specifically, an input mode of the input module 1302 may include touch, a gesture, proximity to a screen, or the like, or may be a voice input. For example, the input module may be a screen of the electronic device, obtains an input operation of the user, generates an input signal based on the obtained input operation, and transmits the input signal to the processing module 1301.

The storage module 1303 may include a volatile memory and/or a nonvolatile memory. The storage module is configured to store instructions or data related to at least one of other modules of a user apparatus device. Specifically, the storage module may record a location of an interface on which an apparatus interface element UI is located.

The display module 1304 may include, for example, a liquid crystal display (LCD), a light emitting diode (LED) display, an organic light emitting diode (OLED) display, a micro-electro-mechanical system (MEMS) display, or an electronic paper display, used to display content (for example, a text, an image, a video, an icon, and a symbol) that can be viewed by the user.

Optionally, the apparatus further includes a communication module 1305, configured to support a personal apparatus in communicating with another personal apparatus (through a communication network). For example, the communication module may be connected to a network through wireless communication or wired communication, to communicate with another personal apparatus or a network server. The wireless communication may use at least one of cellular communication protocols, such as long term evolution (LTE), long term evolution-advanced (LTE-A), code division multiple access (CDMA), wideband code division multiple access (WCDMA), universal mobile telecommunications system (UMTS), and wireless broadband (WiBro), or global system for mobile communications (GSM). The wireless communication may include, for example, short-range communication. The short-range communication may include at least one of wireless fidelity (Wi-Fi), Bluetooth, near field communication (NFC), magnetic stripe transmission (MST), or a GNSS.

It should be noted that each functional module of the apparatus may perform one or more steps in the foregoing method embodiment.

An embodiment of this application further provides a chip system. As shown in FIG. 16, the chip system includes at least one processor 1401 and at least one interface circuit 1402. The processor 1401 and the interface circuit 1402 may be connected to each other through a line. For example, the interface circuit 1402 may be configured to receive a signal from another apparatus (for example, a memory of an electronic device). For another example, the interface circuit 1402 may be configured to send a signal to another apparatus (for example, the processor 1401). For example, the interface circuit 1402 may read instructions stored in the memory, and send the instructions to the processor 1401. When the instructions are executed by the processor 1401, the electronic device is enabled to perform the steps in the foregoing embodiment. Certainly, the chip system may further include another discrete device. This is not specifically limited in this embodiment of this application.

An embodiment of this application further provides a computer storage medium. The computer storage medium includes computer instructions. When the computer instructions run on the foregoing electronic device, the electronic device is enabled to perform functions or steps performed by the mobile phone in the foregoing method embodiments.

An embodiment of this application further provides a computer program product. When the computer program product runs on a computer, the computer is enabled to perform functions or steps performed by the mobile phone in the foregoing method embodiments.

The foregoing descriptions about implementations allow a person skilled in the art to clearly understand that, for the purpose of convenient and brief description, division of the foregoing functional modules is used as an example for illustration. In actual application, the foregoing functions can be allocated to different modules and implemented based on a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiments are merely examples. For example, division into the modules or units is merely logical function division, and may be other division in an actual implementation. For example, a plurality of units or components may be combined or may be integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software function unit.

When the integrated unit is implemented in the form of a software functional unit and sold or used as an independent product, the integrated unit may be stored in a readable storage medium. Based on such an understanding, the technical solutions of this application essentially, or the part contributing to the current technology, or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. An intelligent device control system, comprising:
a first electronic device, configured to display a first interface, wherein the first interface comprises information about a first scenario, wherein
the first electronic device is further configured to: after detecting that a second electronic device is close to the first electronic device or the second electronic device is in contact with the first electronic device, send configuration information of the first scenario and device information of the second electronic device to a third electronic device; and
the third electronic device, configured to: receive the configuration information and the device information of the second electronic device, and associate the second electronic device with the first scenario.

2. The system according to claim 1, wherein the second electronic device is further configured to: detect whether a trigger condition of the first scenario is met, and send a control instruction to the third electronic device when the trigger condition is met; and
the third electronic device is further configured to: receive the control instruction, and control, based on the control instruction, one or more fourth electronic devices to execute the first scenario.

3. The system according to claim 2, wherein the first electronic device is further configured to:
display a second interface after detecting that the second electronic device is close to or is in contact with the first electronic device, wherein the second interface is used to set an event that is capable of being detected by the second electronic device and that needs to be associated with the first scenario; and
receive a first event selected by a user on the second interface; and
that the first electronic device is configured to send the configuration information of the first scenario and the device information of the second electronic device to the third electronic device comprises: sending information about the first event associated with the second electronic device and the configuration information of the first scenario to the third electronic device; and
that the third electronic device is configured to associate the second electronic device with the first scenario comprises: associating, with the first scenario, the first event associated with the second electronic device.

4. The system according to claim 2, wherein the second electronic device is provided with a plurality of control components;
the first electronic device is further configured to:
display a third interface after detecting that the second electronic device is close to or is in contact with the first electronic device, wherein the third interface is used to set a control component that needs to be associated with the first scenario; and
receive a first control component selected by a user on the third interface;
that the first electronic device is configured to send configuration information of the first scenario and device information of the second electronic device to a third electronic device comprises: sending the configuration information of the first scenario and information about the first control component of the second electronic device to the third electronic device; and
that the third electronic device is configured to associate the second electronic device with the first scenario comprises: associating the first control component of the second electronic device with the first scenario.

5. The system according to claim 2, wherein the trigger condition comprises that an operation performed by a user on the second electronic device is detected.

6. The system according to claim 4, wherein the trigger condition comprises that an operation performed by the user on the first control component of the second electronic device is detected; and the control instruction carries information about the operation performed by the user on the first control component; and
that the third electronic device is configured to control, based on the control instruction, one or more fourth electronic devices to execute the first scenario comprises: controlling, based on the information about the first control component carried in the control instruction, the one or more fourth electronic devices to execute the first scenario associated with the first control component.

7. The system according to claim 3, wherein the trigger condition comprises that occurrence of the first event is detected; and the control instruction carries the information about the first event; and
that the third electronic device is configured to control, based on the control instruction, one or more fourth electronic devices to execute the first scenario comprises: controlling, based on the information about the first event carried in the control instruction, the one or more fourth electronic devices to execute the first scenario associated with the first event.

8. The system according to any one of claims 1 to 7, wherein the second electronic device is provided with a display, and the display is configured to display information about a scenario associated with the second electronic device.

9. The system according to claim 8, wherein the information about the scenario associated with the second electronic device comprises information about a scenario associated with each control component.

10. The system according to any one of claims 1 to 9, wherein the first interface comprises a first control; and
an operation performed by the user on the first control is detected, and first prompt information is displayed, wherein the first prompt information is used to prompt the user to enable the second electronic device to be close to or in contact with the first electronic device.

11. The system according to any one of claims 1 to 10, wherein the first electronic device is further configured to display second prompt information after detecting that the second electronic device is close to the first electronic device or is in contact with the first electronic device, wherein the second prompt information is used to prompt the user to associate the second electronic device with the first scenario; and
the sending configuration information of the first scenario and device information of the second electronic device to a third electronic device comprises: detecting an operation associated with a user indication, and sending the configuration information of the first scenario and the device information of the second electronic device to the third electronic device.

12. The system according to any one of claims 1 to 11, wherein the second electronic device comprises a control device provided with a button/key and a device capable of detecting the trigger condition, the control device provided with the button/key comprises a smart switch, and the second electronic device supports a near field communication NFC function or a Bluetooth function.

13. An intelligent device control method, applied to a first electronic device, wherein the method comprises:
displaying a first interface, wherein the first interface comprises information about a first scenario; and
after detecting that a second electronic device is close to the first electronic device or the second electronic device is in contact with the first electronic device, sending configuration information of the first scenario and device information of the second electronic device to a third electronic device, so that the third electronic device associates the second electronic device with the first scenario.

14. The method according to claim 13, wherein the method further comprises:
displaying a second interface after detecting that the second electronic device is close to or is in contact with the first electronic device, wherein the second interface is used to set an event that is capable of being detected by the second electronic device and that needs to be associated with the first scenario; and
receiving a first event selected by a user on the second interface; and
the sending configuration information of the first scenario and device information of the second electronic device to a third electronic device comprises: sending information about the first event associated with the second electronic device and the configuration information of the first scenario to the third electronic device, so that the third electronic device associates, with the first scenario, the first event associated with the second electronic device.

15. The method according to claim 13, wherein the second electronic device is provided with a plurality of control components, and the method further comprises:
displaying a third interface after detecting that the second electronic device is close to or is in contact with the first electronic device, wherein the third interface is used to set a control component that needs to be associated with the first scenario; and
receiving a first control component selected by a user on the third interface; and
the sending configuration information of the first scenario and device information of the second electronic device to a third electronic device comprises: sending the configuration information of the first scenario and information about the first control component of the second electronic device to the third electronic device, so that the third electronic device associates the first control component of the second electronic device with the first scenario.

16. The method according to any one of claims 13 to 15, wherein the first interface comprises a first control, and the method further comprises:
detecting an operation performed by the user on the first control, and displaying first prompt information, wherein the first prompt information is used to prompt the user to enable the second electronic device to be close to or in contact with the first electronic device.

17. The method according to any one of claims 13 to 16, wherein the method further comprises:
displaying second prompt information after detecting that the second electronic device is close to the first electronic device or is in contact with the first electronic device, wherein the second prompt information is used to prompt the user to associate the second electronic device with the first scenario; and
the sending configuration information of the first scenario and device information of the second electronic device to a third electronic device comprises: detecting an operation associated with a user indication, and sending the configuration information of the first scenario and the device information of the second electronic device to the third electronic device.

18. An intelligent device control method, applied to a second electronic device, wherein the method comprises:
detecting whether a trigger condition of a first scenario is met, and sending a control instruction to a third electronic device when the trigger condition is met, for the third electronic device to control one or more fourth electronic devices to execute the first scenario.

19. The method according to claim 18, wherein the trigger condition comprises that an operation performed by a user on the second electronic device is detected.

20. The method according to claim 18, wherein the trigger condition comprises that an operation performed by a user on a first control component of the second electronic device is detected; and the control instruction carries information about the operation performed by the user on the first control component.

21. The method according to claim 18, wherein the trigger condition comprises that occurrence of a first event is detected; and the control instruction carries information about the first event.

22. The method according to any one of claims 18 to 21, wherein the second electronic device is provided with a display, and the display is configured to display information about a scenario associated with the second electronic device.

23. The method according to claim 22, wherein the information about the scenario associated with the second electronic device comprises information about a scenario associated with each control component.

24. The method according to any one of claims 18 to 23, wherein the second electronic device comprises a control device provided with a button/key and a device capable of detecting the trigger condition, the control device provided with the button/key comprises a smart switch, and the second electronic device supports an NFC function or a Bluetooth function.

25. An intelligent device control method, applied to a third electronic device, wherein the method comprises:
when a second electronic device is close to a first electronic device or the second electronic device is in contact with the first electronic device, receiving configuration information of a first scenario and device information of the second electronic device from the first electronic device;
associating the second electronic device with the first scenario;
receiving a control instruction from the second electronic device when a trigger condition of the first scenario is met; and
controlling, based on the control instruction, one or more fourth electronic devices to execute the first scenario.

26. The method according to claim 25, wherein the trigger condition comprises any one of the following conditions: a user performs an operation on the second electronic device, the user performs an operation on a first control component of the second electronic device, and a first event occurs.

27. The method according to claim 26, wherein when the trigger condition is that the user performs an operation on the first control component of the second electronic device, the control instruction carries information about the operation performed by the user on the first control component; and
the controlling, based on the control instruction, one or more fourth electronic devices to execute the first scenario comprises: controlling, based on information about the first control component carried in the control instruction, the one or more fourth electronic devices to execute the first scenario associated with the first control component.

28. The method according to claim 26, wherein when the trigger condition is that the first event occurs, the control instruction carries information about the first event; and
the controlling one or more fourth electronic devices to execute the first scenario comprises: controlling, based on the information about the first event carried in the control instruction, the one or more fourth electronic devices to execute the first scenario associated with the first event.

29. A computer-readable storage medium, comprising a program or instructions, wherein when the program or the instructions are executed, the method according to any one of claims 13 to 17 is implemented, or the method according to any one of claims 18 to 24 is implemented, or the method according to any one of claims 25 to 28 is implemented.

30. An electronic device, wherein the access device comprises a processor and a memory, wherein
the memory is configured to store computer-executable instructions, and when the electronic device runs, the processor executes the computer-executable instructions stored in the memory, for the electronic device to perform the method according to any one of claims 13 to 17, or perform the method according to any one of claims 18 to 24, or perform the method according to any one of claims 25 to 28.
